(19) Europäisches Patentamt

European Patent Office

Office européen des brevets

(11) **EP 0 706 333 B2**

(12) **NOUVEAU FASCICULE DE BREVET EUROPEEN**

(45) Date de publication et mention de la décision concernant l'opposition:
**28.01.2004 Bulletin 2004/05**

(45) Mention de la délivrance du brevet:
**20.05.1998 Bulletin 1998/21**

(21) Numéro de dépôt: **94921011.6**

(22) Date de dépôt: **01.07.1994**

(51) Int Cl.⁷: $A41H\ 3/00$

(86) Numéro de dépôt international:
**PCT/FR1994/000812**

(87) Numéro de publication internationale:
**WO 1995/001110 (12.01.1995 Gazette 1995/03)**

(54) **SYSTEME DE GRADATION DE VETEMENTS**

GRADIERUNGSVERFAHREN FÜR BEKLEIDUNG

SYSTEM FOR SIZING OF GARMENTS

(84) Etats contractants désignés:
**DE ES FR GB IT**

(30) Priorité: **02.07.1993 FR 9308118**

(43) Date de publication de la demande:
**17.04.1996 Bulletin 1996/16**

(73) Titulaire: **LECTRA SYSTEMES**
**33610 Cestas (FR)**

(72) Inventeur: **SURVILLE, Jean-Marc**
**F-33400 Talence (FR)**

(74) Mandataire: **Schwartz, Thierry J.**
**Cabinet ORES**
**36, rue de St Pétersbourg**
**75008 Paris (FR)**

(56) Documents cités:
EP-A- 0 338 964          WO-A-89/08409
DE-A- 2 656 997          FR-A- 2 561 801

• MANUFACTURING REVIEW, vol.4, no.2, Juin 1991, NEW-YORK (US) pages 126 - 138, XP000218069 D. C. STEIN , E. B. MAGRAB 'expert system for the design and manufacture of made-to-measure clothing'

EP 0 706 333 B2

**Description**

La présente invention est relative à un système informatique de gradation de vêtements.

La qualité et la valeur d'un vêtement dépendent principalement des tissus employés et de la coupe de ces tissus. Un vêtement forme une surface complexe (bi-dimensionnelle) suivant de plus ou moins près la limite du volume (tridimensionnelle) de la personne à habiller. La difficulté provient du fait que, au départ, chaque pièce d'un vêtement est une surface plane qui doit s'adapter aux variations de volume des individus. De plus, les vêtements de prêt-à-porter ont un style plus ou moins marqué. Un vêtement de prêt-à-porter arrive ainsi à atténuer ou à cacher les imperfections de l'anatomie du porteur.

De façon classique, en conception assistée par ordinateur (CAD en terminologie anglo-saxonne), lors de la conception d'un nouveau vêtement, l'on crée un patron pour une taille donnée, par exemple, pour la taille "40", c'est-à-dire que l'on détermine la géométrie de toutes les pièces du nouveau vêtement pour cette taille. Les autres tailles destinées à habiller des membres d'une population sont obtenues par gradation consistant à introduire dans l'ordinateur les règles de gradation pour ces vêtements, c'est-à-dire les variations avec la taille, pour ces vêtements, des coordonnées des points caractéristiques, notamment périphériques, de chaque pièce du vêtement. D'une part, ces règles de gradation sont élaborées à partir des connaissances empiriques du gradeur. D'autre part, il existe de grandes quantités de règles de gradation pour divers types de vêtements. La difficulté pour appliquer une telle méthode réside dans le choix de la bonne règle pour le bon point caractéristique de chaque pièce d'un vêtement et pour une taille de départ donnée.

Le gradeur interprète les barèmes des mensurations pour les diverses tailles des vêtements et en déduit la règle à appliquer aux divers points de la pièce du vêtement traitée.

L'établissement de ces règles de gradation et/ou leur application aux vêtements prend donc un temps important durant lequel la station de conception assistée par ordinateur, qui est une ressource rare et coûteuse, est rendue indisponible.

De plus, il arrive qu'une gradation non réussie provoque une mévente, en magasin, du vêtement et/ou son retour important, dans le cas de la vente par correspondance. On a ainsi proposé diverses solutions pour automatiser la gradation de vêtements. D'une part, il est connu d'obtenir les diverses tailles désirées par homothétie des diverses pièces du vêtement. Les coefficients d'homothétie pour les diverses tailles sont déduits des barèmes de mensurations.

Il est bien évident que, dans la mesure où l'enveloppe des individus (la peau) ne varie pas de façon homothétique avec leur taille, ce type de gradation n'est qu'approximatif. Ainsi, il ne peut convenir que pour des vêtements amples, comme par exemple les vêtements de sport ou les sweatshirts. Son application aux vêtements de ville conduit à des résultats médiocres qui ne sont acceptés que dans les pays dont la population n'est pas très exigeante sur la qualité de la coupe des vêtements.

D'autre part, on a proposé des systèmes dans lesquels on élabore un ensemble de règles correspondant aux divers points caractéristiques d'un vêtement et l'on affecte à chaque point caractéristique du vêtement le nom de la règle correspondante. Les systèmes informatiques utilisent la relation biunivoque entre les noms des règles et les noms des points pour affecter la règle pertinente à chaque point caractéristique du vêtement.

Ce système donne satisfaction chaque fois que l'on dispose de règles satisfaisantes pour un vêtement. Toutefois, il n'assiste pas l'utilisateur dans la création de règles ni dans le choix d'un ensemble de règles convenant le mieux à un vêtement. Uniquement, après le choix de l'ensemble de règles, celles-ci sont appliquées de façon automatique à la géométrie du vêtement traité.

C'est par conséquent un but de la présente invention d'offrir un système de gradation assurant une gradation de haute qualité.

C'est également un but de la présente invention d'offrir un système permettant de grader rapidement un grand nombre de pièces de vêtements.

C'est aussi un but de la présente invention d'offrir un système de gradation facile à mettre en oeuvre.

C'est également un but de la présente invention d'offrir un système de gradation susceptible de s'adapter à un style de vêtement ou à un nouveau type de vêtement.

C'est aussi un but de la présente invention d'offrir un système de gradation susceptible de s'adapter à une morphologie particulière d'une population.

C'est également un but de la présente invention d'offrir un système permettant une gradation reproductible.

C'est aussi un but de la présente invention d'offrir un système de gradation permettant de conserver le style d'un vêtement indépendamment de sa taille.

C'est également un but de la présente invention d'offrir un système permettant de garantir la cohérence d'une collection de vêtements.

C'est aussi un but de la présente invention d'offrir un système de gradation sûr, ne risquant pas de conduire à un vêtement de qualité médiocre.

C'est également un but de la présente invention d'offrir un système comportant une base de données contenant les connaissances sur les vêtements nécessaires à l'élaboration, à la sélection et/ou à l'application d'une règle de gradation.

C'est aussi un but de la présente invention d'offrir un système informatique de gradation qui ne nécessite pas de la part du gradeur des connaissances informatiques.

C'est également un but de la présente invention d'offrir un système de gradation facilitant, pour le gradeur, la compréhension des opérations de gradation effectuées.

C'est aussi un but de la présente invention d'offrir un système de gradation permettant de visualiser, par exemple sur un moniteur, le résultat de l'application d'une ou plusieurs règles à un vêtement.

Selon l'invention, ces buts sont atteints par un système informatique de gradation comportant les caractéristiques de la revendication 1. Avantageusement, le système comporte une base de données comportant un ou plusieurs barème(s) de mensuration type(s) des populations cibles pour lesquelles l'on veut créer des vêtements et des outils pour enrichir une telle base de données avec de nouveaux barèmes de mensuration. La base de données comporte également les relations entre les barèmes de mensuration et l'ensemble des connaissances, relatives à un vêtement spécifique, constituant la taxonomie de ce vêtement.

Avantageusement, à partir des barèmes anthropométriques, on élabore des barèmes de vêtements dont les valeurs de mensuration sont séparées par des intervalles réguliers.

L'invention a également pour objet un système informatique de gradation de vêtements, caractérisé en ce que le logiciel est susceptible de mettre en oeuvre une même relation entre les déplacements des points caractéristiques des pièces d'un vêtement et les variations des mensurations avec la taille, avec une pluralité de barèmes de mensuration pour en déduire une pluralité de gradations d'un vêtement.

L'invention a également pour objet un système informatique, caractérisé en ce que le logiciel de gradation comporte des moyens pour créer de nouvelles relations entre les déplacements des points caractéristiques des pièces d'un vêtement et les variations des mensurations avec la taille.

L'invention a également pour objet un système informatique, caractérisé en ce qu'il comporte une base de données stockant au moins un barème de mensuration et au moins une relation entre les déplacements des points caractéristiques des pièces d'un vêtement et les variations des mensurations avec la taille.

L'invention a également pour objet un système informatique, caractérisé en ce qu'on utilise comme point caractéristique des pièces d'un vêtement, les points devant être en vis à vis avec les points de mesure d'un tableau de mensuration.

L'invention a également pour objet un système informatique, caractérisé en ce qu'il comporte un interface, notamment un interface graphique, comportant des menus de dialogue avec le gradeur.

L'invention a également pour objet un système informatique, caractérisé en ce qu'il comporte des moyens pour afficher sur un écran graphique des pictogrammes représentant les données nécessaires au traitement (secteur d'activité, mensurations types de vêtements...), des moyens de pointage par l'opérateur des divers éléments graphiques affichés et des moyens d'interprétation de ces pointages comme des instructions ou commandes du système informatique.

L'invention a également pour objet un système informatique, caractérisé en ce qu'il comporte un menu offrant au gradeur le choix de la relation à mettre en oeuvre entre les déplacements des points caractéristiques des pièces d'un vêtement et les variations des mensurations avec la taille disponible dans le système.

L'invention a également pour objet un système informatique, caractérisé en ce qu'il comporte un menu offrant au gradeur le choix du barème de mensuration à mettre en oeuvre.

L'invention a également pour objet un système informatique, caractérisé en ce qu'il comporte des moyens d'affichage graphique du résultat de la gradation.

L'invention a également pour objet un système informatique, caractérisé en ce que l'unité centrale est une station graphique de conception de vêtements assistée par ordinateur.

L'invention a également pour objet un système informatique de gradation, caractérisé en ce que les moyens de mémorisation mémorisent des tolérances admissibles dans la modification du barème de mensuration et en ce qu'il comporte des moyens pour interdire une modification dépassant lesdites tolérances admissibles.

L'invention a également pour objet un système informatique, caractérisé en ce qu'il comporte des moyens pour modifier les relations entre les déplacements des points caractéristiques des pièces d'un vêtement et les variations de mensuration avec la taille du vêtement, notamment pour modifier les pourcentages des déplacements affectés aux divers points caractéristiques.

L'invention a également pour objet un système informatique, caractérisé en ce qu'il comporte des moyens pour affecter à chaque point caractéristique du vêtement à grader la règle qui comporte le même nom que le nom affecté audit point caractéristique.

L'invention a également pour objet un système informatique, caractérisé en ce qu'il comporte des moyens, notamment un système expert, pour reconnaître l'emplacement des divers points caractéristiques sur les diverses pièces du vêtement pour leur attribuer les noms correspondants.

L'invention a également pour objet un système informatique de gradation de vêtements, caractérisé en ce qu'il comporte des moyens d'élaboration de règles de gradation directement sur les pièces d'un vêtement et en ce que, parce-qu'un point caractéristique d'une pièce du vêtement peut subir une pluralité de déplacements, il comporte des moyens pour déterminer le déplacement résultant de cette pluralité de déplacements.

L'invention a également pour objet un système informatique de gradation de vêtements, caractérisé en ce qu'il comporte un système expert comprenant une base de connaissance dans laquelle sont mémorisées des relations entre les déplacements des points caractéristiques des pièces d'un vêtement et les variations des mensurations avec la taille du vêtement.

L'invention a également pour objet un système informatique de gradation de vêtement, caractérisé en ce qu'il comporte un système expert assurant l'uniformisation de la répartition des intervalles entre les diverses tailles d'un barème et en ce que le système expert propose au gradeur le barème uniformisé optimal.

L'invention a également pour objet un système informatique de gradation de vêtements, caractérisé en ce que, dans le cas où le barème à utiliser pour effectuer la gradation ne comporte pas certaines mensurations pertinentes, le système expert les détermine à partir d'autres mensurations du même barème.

L'invention a également pour objet un système informatique de gradation de vêtements, caractérisé en ce qu'il comporte un système expert assurant la reconnaissance des points caractéristiques d'un vêtement à grader.

L'invention a également pour objet un système informatique, caractérisé en ce que le système expert comporte une base comprenant des relations entre les déplacements des points caractéristiques des pièces d'un vêtement et les variations de mensuration avec la taille du vêtement, et en ce qu'il en déduit les règles de gradation à appliquer aux divers points caractéristiques du vêtement à grader, et en ce qu'il applique les règles de gradation aux points caractéristiques reconnus.

L'invention a également pour objet un procédé de gradation de vêtements mettant en oeuvre un système informatique selon l'invention comme décrit selon la revendication 24.

L'invention sera mieux comprise au moyen de la description ci-après et des figures annexées données comme des exemples non limitatifs, et sur lesquelles :

- la figure 1 est un schéma explicatif du principe de gradation ;
- la figure 2 est un premier schéma synoptique d'un système informatique de type connu ;
- la figure 3 est un deuxième schéma synoptique d'un système informatique de type connu ;
- la figure 4 est un schéma synoptique d'un exemple de réalisation d'un système selon la présente invention ;
- la figure 5 est un schéma synoptique plus détaillé d'un système selon la présente invention ;
- la figure 6 est un schéma synoptique illustrant l'enrichissement de la base de données selon la présente invention ;
- la figure 7 est un schéma explicatif des taxonomies selon la présente invention ;
- la figure 8 est un organigramme illustrant la création d'une nouvelle taxonomie avec un système selon la présente invention ;
- la figure 9 est un schéma explicatif de l'affectation de règles à divers points caractéristiques d'un vêtement ;
- la figure 10 est un schéma synoptique du procédé d'établissement des règles de gradation selon la présente invention ;
- la figure 11 est un schéma synoptique d'un exemple de procédé d'attribution de règles de gradation à une pièce de vêtement ;
- la figure 12 est un organigramme illustrant la gradation d'un vêtement avec un système selon la présente invention ;
- la figure 13 est un schéma descriptif de la génération de règles pour un vêtement comportant des pinces ;
- la figure 14 est un schéma explicatif de l'affectation des divers points absolus aux pièces de tous types de vêtements.

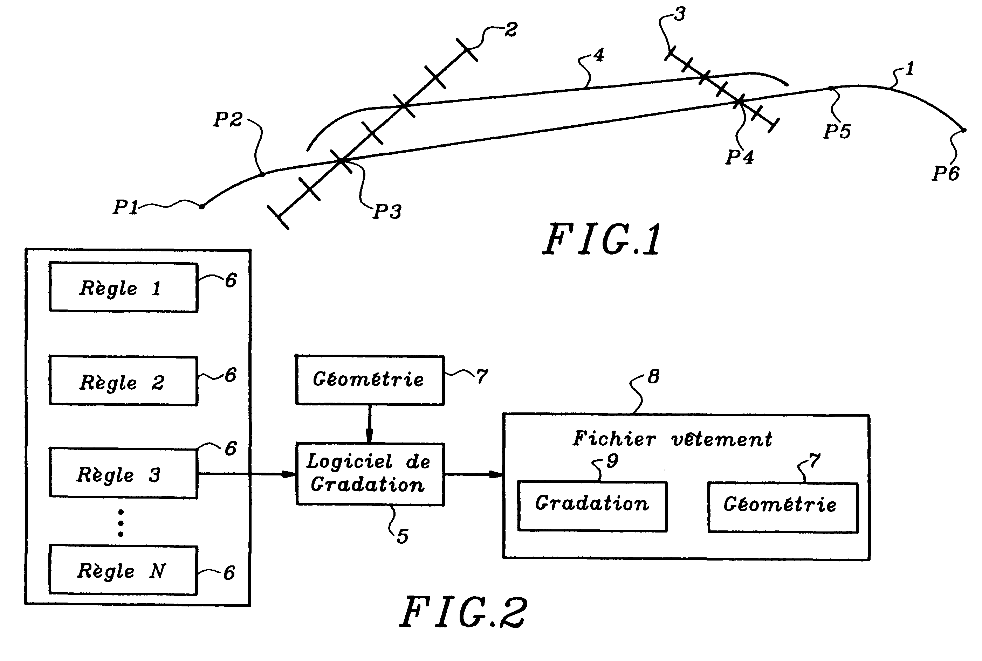

Sur les figures 1 à 14, l'on a utilisé les mêmes références pour désigner les mêmes éléments.

Sur la figure 1, l'on peut voir la limite 1 d'une pièce de vêtement correspondant à une taille donnée, par exemple à la taille "40". Pour fabriquer les vêtements dans d'autres tailles, l'on détermine la variation avec la taille des points caractéristiques, par exemple des points P1 à P6 de la figure 1. L'on a illustré en 2 la variation avec la taille du point P3 et en 3 celle du point P4. Pour le prêt-à-porter, la taille varie de façon discontinue. Ainsi, les variations 2 et 3 portent des graduations correspondant, par exemple, aux positions des points pour les tailles "48", "46", "44", "42", "40", "38" et "36" ; la limite de la pièce de vêtement de taille "44" porte sur la figure 1 la référence 4.

Dans les logiciels de gradation des systèmes de conception assistée par ordinateur de type connu, le gradeur choisit, parmi les règles de gradation disponibles dans le logiciel, celles qui lui semblent le mieux convenir au type de vêtement et à la taille de départ. Ce choix est très empirique. Le gradeur se base sur son expérience, ce qui peut conduire à d'excellents résultats dans le cas de personnels hautement qualifiés. Un gradeur moins expérimenté applique des règles toutes faites que l'on trouve dans les livres d'enseignement des gradations, ou choisit, de façon approximative, une règle de gradation disponible dans le système de conception assistée par ordinateur, ce qui peut conduire à des résultats catastrophiques qui seront corrigés par une nouvelle gradation ou à des résultats moyens compromettant le succès commercial du vêtement.

Sur la figure 2, l'on peut voir le principe d'un premier mode de fonctionnement d'un système informatique de gradation de type connu. Ce système comporte, par exemple, une station de travail graphique munie d'un logiciel de gradation simple 5. Habituellement, l'on met en oeuvre une station graphique du même type que celle destinée à la conception de vêtements assistée par ordinateur.

Un certain ensemble de règles 6 de gradation de vêtements est stocké dans le dispositif de mémorisation de la station graphique, typiquement un disque dur. Le gradeur, après avoir chargé le logiciel de gradation 5, charge en mémoire une géométrie 7 d'une pièce de vêtement, par exemple le devant d'une veste, à partir de la mémoire de masse de la station graphique, ou d'une base de données connectée à un réseau informatique. Le gradeur affecte à chaque point caractéristique de la géométrie 7 traitée, une règle de gradation, c'est-à-dire les incréments que doit subir ce point en fonction de la taille du vêtement. L'on applique les règles à chaque point caractéristique de chaque pièce du vêtement. Le logiciel de gradation 5 de type connu n'incorpore aucune connaissance sur le vêtement traité. Dans le meilleur des cas, cette connaissance est bien maîtrisée par le gradeur. Il applique alors, à chaque point, à l'aide du logiciel de gradation, la règle adéquate. Toutefois, la cohérence du vêtement n'est jamais garantie. En effet, le gradeur peut ne pas suffisamment tenir compte des gradations appliquées au devant d'une veste lorsqu'il traite le dos de cette même veste. Dans un tel cas, la variation de la taille est mal répartie entre le devant et le dos. Un gradeur peu expérimenté peut choisir une règle inadaptée au point traité du type de vêtement. Dans tous les cas, l'opération de gradation est longue puisque le gradeur doit appliquer individuellement une règle à chaque point.

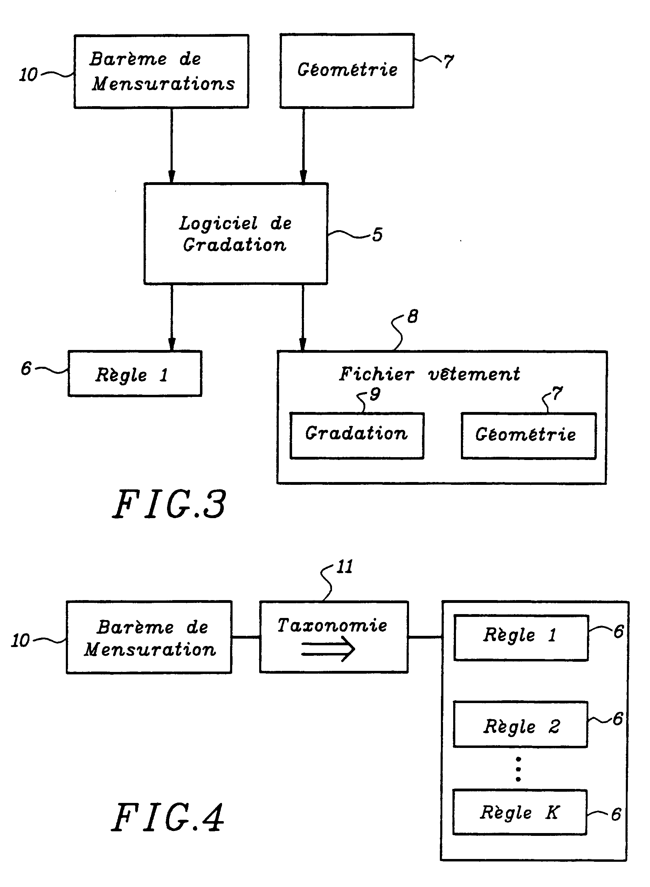

Avec le système informatique de type connu, un gradeur expérimenté peut générer de nouvelles règles de gradation, correspondant, par exemple, à un nouveau style ou un nouveau type de pièces de vêtement, selon le principe illustré sur la figure 3. Le gradeur utilise un barème de mensuration 10 qui est, soit décrit dans un document papier, soit mémorisé dans la mémoire du gradeur (personne physique), soit, dans le meilleur des cas, mémorisé dans la mémoire de la station de travail graphique. A l'aide du logiciel de gradation 5, le gradeur détermine à partir du barème de mensuration 10 les incréments à appliquer pour les diverses tailles aux divers points caractéristiques d'un vêtement. Chaque nouvelle règle 6 comprend l'ensemble des incréments pour un point caractéristique pour toutes les tailles. Cette règle est, d'une part, mémorisée, en tant que telle dans la mémoire de masse de l'ordinateur et, d'autre part, participe à la gradation 9 du fichier de vêtement 8.

Le logiciel de gradation 5 de type connu n'ayant aucune connaissance sur les vêtements, c'est le gradeur qui établit les relations entre les incréments de la règle et les tailles standardisées. De plus, il est à noter que la nouvelle règle 6 créée n'est issue que d'un seul tableau de mensuration 10.

Pour remédier à ces inconvénients, le logiciel de gradation, comme illustré sur la figure 4, utilise et traite les barèmes et les taxonomies.

a) Les barèmes : à partir d'une étude statistique sur les mensurations d'une population cible, on a établi divers types de barèmes constituant des outils permettant d'offrir un modèle de vêtement dans diverses tailles. La taxonomie indique la façon de répartir les incréments (variation de mensuration) aux divers points du vêtement. Il existe plusieurs types de barèmes. Un barème anthropométrique comporte des moyennes des données brutes prises sur un échantillon d'individus. Ces moyennes n'ont pas de valeur de dispersion.

Le traitement de certaines mensurations d'un barème anthropométrique assurant une meilleure adaptation à la confection des vêtements (et non pas aux individus) permet la construction de barèmes des tailles.

Un barème de vêtement contient les informations nécessaires à la confection d'un type de vêtement. Outre les informations détaillées des mensurations pertinentes provenant d'un barème des tailles, ces barèmes comportent des informations complémentaires comme par exemple la longueur d'un vêtement fini, la longueur des manches, etc....

Le système selon l'invention comporte avantageusement un module de traitement des barèmes permettant d'uniformiser la répartition des intervalles entre les diverses tailles. On répartit régulièrement les intervalles entre les diverses tailles d'un barème à traiter, à partir d'une taille centrale, par exemple à partir de la taille 40, pour la ou les mesure(s) pertinente(s) concernant les gradations que l'on veut effectuer. L'on adopte un intervalle régulier pour toutes les tailles ou pour une plage de tailles, les tailles extrêmes par exemple correspondant à des intervalles différents.

Un exemple d'informations extraites d'un barème des tailles est donné au tableau 1.

## TABLEAU 1

| taille | 36 | 38 | 40 | 42 | 44 |
|---|---|---|---|---|---|
| tour hanche | 91 | 95,5 | 98 | 102,5 | 107 |
| intervalle | | 4,5 | 2,5 | 4,5 | 4,5 |

## TABLEAU 2

| taille | 36 | 38 | 40 | 42 | 44 |
|---|---|---|---|---|---|
| tour hanche | 90 | 94 | 98 | 102 | 106 |
| intervalle | | 4 | 4 | 4 | 4 |

Le tableau 2 donne un premier exemple de traitement du barème du tableau 1 en adoptant pour l'intervalle la valeur moyenne des intervalles du tableau 2 (4 cm) et en partant de la taille centrale "40".

Avantageusement, le système selon la présente invention comporte des valeurs de tolérance acceptables lors d'un tel traitement. Par exemple, les valeurs de tolérance seront nettement plus faibles lorsqu'il s'agit de réduire la taille d'un vêtement que lorsqu'il s'agit de l'augmenter. Ainsi, par exemple, la valeur du tour de hanche de 94 pour la taille 38 est inférieure de 1,5 cm par rapport à la valeur donnée par le tableau 1. Cette valeur peut être rejetée par le système comme n'étant pas acceptable. Dans un tel cas, on adopte un intervalle constant sur une ou plusieurs plages du barème de mensuration ou on adopte une autre méthode de régularisation des intervalles. Par exemple, on réalise la médiane, la médiane pondérée ou la moyenne arithmétique des intervalles du tableau 1. Par exemple, dans le tableau 3, on a adopté pour l'intervalle la valeur la plus fréquemment rencontrée égale à 4,5 cm. Le tableau 3 part d'un tour de hanche de 98 pour une taille "40".

## TABLEAU 3

| taille | 36 | 38 | 40 | 42 | 44 |
|---|---|---|---|---|---|
| tour hanche | 89 | 93,5 | 98 | 102,5 | 107 |
| intervalle | | 4,5 | 4,5 | 4,5 | 4,5 |

Dans le tableau 4, on a gardé la même valeur de l'intervalle (4,5 cm) mais en partant d'un tour de hanche 91 pour une taille "36".

## TABLEAU 4

| taille | 36 | 38 | 40 | 42 | 44 |
|---|---|---|---|---|---|
| tour hanche | 91 | 95,5 | 100 | 104,5 | 109 |
| intervalle | | 4,5 | 4,5 | 4,5 | 4,5 |

Dans le tableau 5, on est parti du même tour de hanche pour la taille "36" mais en utilisant un intervalle de 4 cm.

## TABLEAU 5

| taille | 36 | 38 | 40 | 42 | 44 |
|---|---|---|---|---|---|
| tour hanche | 91 | 95 | 99 | 103 | 107 |
| intervalle | | 4 | 4 | 4 | 4 |

Dans le tableau 6, on peut voir un barème régularisé selon l'invention concernant les jupes pour femmes, les trois premières lignes concernent des mesures anthropométriques comme le tour de taille, le tour de bassin et la hauteur montant, la quatrième ligne indiquant la longueur totale du vêtement. Toutes les mesures sont données en centimètres. La longueur totale de la jupe varie d'un centimètre entre deux tailles standardisées.

**TABLEAU 6**

| POPULATION France SECTEUR femmes TYPE VETEMENT Jupe | | tailles | | | | |
|---|---|---|---|---|---|---|
| mensuration | source | 36 | 38 | 40 | 42 | 44 |
| tour de taille | anthro | 66 | 70 | 74 | 78 | 82 |
| tour de bassin | anthro | 91 | 95 | 98 | 102 | 107 |
| hauteur montant | anthro | 19 | 19,3 | 19,6 | 20 | 20,4 |
| longueur totale | vetement | 59 | 60 | 61 | 62 | 63 |

Il est bien entendu que le traitement de plusieurs intervalles d'un même barème ne sort pas du cadre de la présente invention. De même, un même barème peut être régularisé de diverses manières pour divers types de vêtements. En effet, la valeur de tolérance ne sera pas la même pour un pantalon que pour une jupe. La variation régulière des dimensions entre deux tailles d'un vêtement, facilite la gradation, permet de garder un même style au vêtement, facilite le contrôle des pièces lors de la coupe tout en offrant des vêtements qui vont bien à la majorité de la population cible.

Il est bien entendu qu'un barème régularisé pour un type de vêtement peut être sauvegardé pour la gradation d'un vêtement du même type pour une même population cible.

Dans une première variante de réalisation, l'opérateur indique au système informatique selon l'invention, l'intervalle ou les intervalles à régulariser, par exemple, le tour de hanches et le tour de poitrine, le système affichant les résultats, par exemple sous forme d'un tableau, le système attire l'attention de l'opérateur sur les valeurs sortant des tolérances, par exemple par un affichage en rouge ou un clignotement. En variante, le système n'affiche pas les valeurs des intervalles sortant des tolérances admises. Avantageusement, l'introduction de la requête de calcul de régularisation des barèmes est effectuée graphiquement. Par exemple, le ou les intervalle(s) à régulariser sont sélectionnés avec un outil de pointage sur un pictogramme représentant le vêtement, la taille de base et les étendues des diverses plages étant indiquées dans un tableau reprenant les barèmes à traiter.

Dans une variante avantageuse de réalisation, le système informatique selon la présente invention calcule toutes les régularisations possibles du barème de mensuration à traiter, rejette les intervalles régularisés qui ne correspondent pas aux tolérances choisies par l'opérateur et classe les barèmes obtenus en fonction de la qualité de gradation qu'ils peuvent procurer. On calcule pour toutes les mensurations pertinentes pour le vêtement à grader des intervalles régularisés sur toutes les combinaisons possibles de plages d'intervalles, en prenant successivement toutes les tailles du barème comme taille de base de la régularisation. La proposition et le classement des divers barèmes régularisés obtenus sont avantageusement effectués par un système expert, éventuellement après rejet des barèmes régularisés qui ne correspondent pas aux tolérances imposées. Le système expert comporte une base de connaissance incorporant les connaissances d'un expert en confection, et notamment d'un gradeur, sur la façon de grader les vêtements. La base de connaissance comporte, de façon classique, une base de fait et une base de règle. La base de règle comporte les règles du type : soit :

$$\text{Intervalle théorique} = (\text{somme des intervalles entre tailles})/(\text{nombre de tailles} - 1)$$

Mensuration réelle : mensuration du barème.

Rang d'une taille, le nombre de taille consécutif qui la sépare de la taille de référence ; les tailles inférieures à la taille de référence sont affectées du signe -. Par exemple, pour une taille de référence de 40, on affecte aux tailles les rangs suivants :

- taille 36 : rang - 2,
- la taille 38 : rang - 1,
- la taille 40 : rang 0,
- la taille 42 : rang 1, et
- la taille 44 rang 2.

Une mensuration calculée est égale à la mensuration de la taille de référence augmentée du produit du rang de la taille par la valeur de l'intervalle théorique.

Régle 1 :

Si (mensuration réelle - mensuration calculée) > tolérance, alors taille de rupture.

Règle 2 :

Les tailles de rupture constituent les limites des plages de tailles à uniformiser.

Règle 3 :

Si les tailles de rupture se trouvent aux extrémités du barème de mensuration, alors favoriser une plage d'intervalles uniformisés centrales la plus longue possible.

Règle 4 :

S'il existe une taille de rupture dans la partie centrale du barème de mesure, alors favoriser les barèmes comportant deux longues plages d'intervalles uniformisés.

Dans une première variante de réalisation, le système informatique selon la présente invention présente au gradeur pour validation le barème vêtement optimisé par le système, c'est-à-dire le barème de vêtement régularisé qui a été considéré comme optimal par le système expert. Eventuellement, le gradeur effectue son choix entre, par exemple, les trois meilleurs barèmes de vêtement régularisés. En variante, la régularisation du barème est une opération transparente pour le gradeur, le système optimisant le barème de vêtement avant l'étape de gradation.

L'optimisation du barème vêtement peut tenir compte des connaissances sur le type de vêtement à grader contenu dans la taxonomie, par exemple on peut inclure les tolérances acceptables dans la taxonomie. Par exemple, pour un vêtement devant affiner la silhouette, la taxonomie comportera des tolérances faibles pour les mensurations susceptibles d'accentuer l'embonpoint du porteur.

Dans le cas où on ne désire pas régulariser les barèmes sur des plages, il peut s'avérer avantageux de simplifier le barème par exemple en arrondissant à des valeurs entières les intervalles entre les diverses mensurations.

b) les taxonomies : le logiciel de gradation selon la présente invention utilise des modules 11 incorporant les connaissances d'un type de vêtement. Ces modules sont appelés taxonomies dans la suite du Brevet. Les taxonomies 11 permettent de relier un tableau de mensuration 10 mémorisé dans la mémoire de la station de travail graphique ou dans une base de données d'un réseau informatique, à un ensemble de règles de gradation 6 des divers points caractéristiques du vêtement. Une taxonomie 11 est donc indépendante du tableau de mensuration et permet de générer, de façon automatique, les règles de gradation à partir d'un autre barème de mensuration, par exemple, à une autre population. Un exemple de taxonomie 11 regroupe les connaissances suivantes sur un vêtement :

- nom du type de vêtement ;
- nom et configuration générale des diverses pièces du vêtement ;
- points caractéristiques du vêtement se trouvant en vis-à-vis des points déterminant les mensurations de la personne à vêtir ;
- la répartition, pour chaque mensuration, des intervalles entre tailles, entre les diverses pièces du vêtement et l'orientation pour chaque point de cette variation.

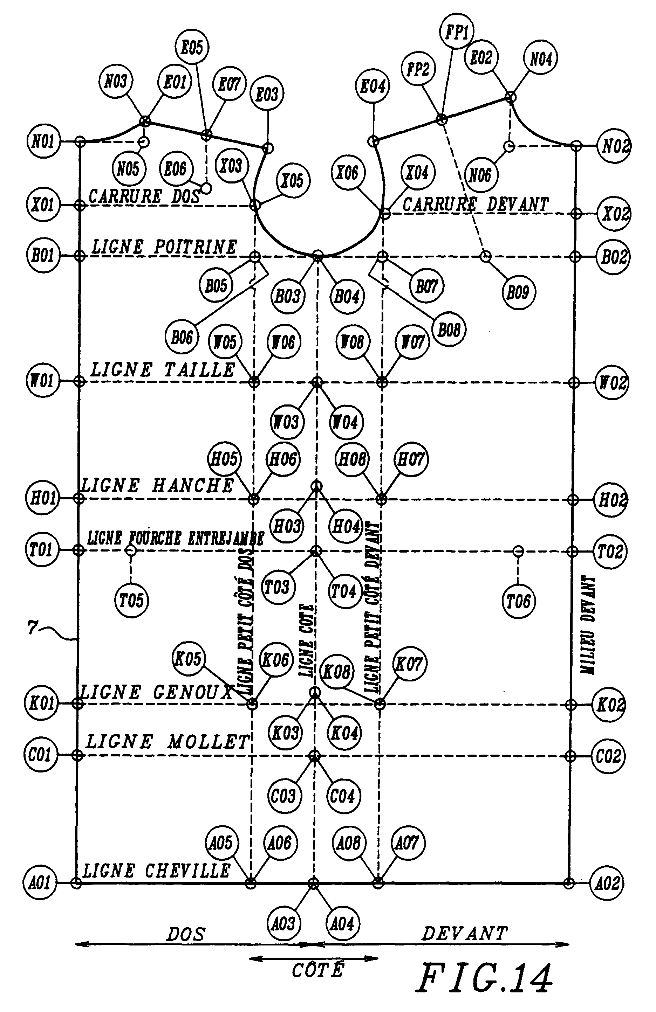

Avantageusement, l'on utilise comme points caractéristiques les points devant être en vis-à-vis avec les points de mesure caractéristiques d'un tableau de mensuration. Nous appellerons ce type de points caractéristiques, des points absolus, dans la mesure où ils sont définis de manière unique quel que soit le type de vêtement. Par exemple, le point de devant en vis-à-vis du tour de poitrine est le même pour une veste, une chemise ou un manteau (figure 14).

Avantageusement, on affecte un nom mnémotechnique à chaque point absolu du vêtement. Chaque nom comporte par exemple la première lettre du nom, en langue anglaise, de la ligne sur laquelle il se trouve et un numéro à deux chiffres.

Lorsque l'on crée un nouveau type de vêtement ou un nouveau style de vêtement, il peut s'avérer nécessaire de créer une nouvelle taxonomie 11. Cette taxonomie peut être créée ex nihilo, cette opération étant normalement réservée au concepteur du logiciel. La taxonomie est, par exemple, saisie dans un éditeur, comportant avantageusement un masque de saisie pour les éléments textuels. Avantageusement, un éditeur graphique permet de créer le pictogramme de la taxonomie ainsi que tous les dessins permettant la visualisation et la modification ultérieure, éventuelle, de la nouvelle taxonomie. On établit, avantageusement, graphiquement, les liens entre les éléments, les dessins et les éléments textuels (alpha numériques) de la taxonomie.

L'étude d'une nouvelle taxonomie passe par les étapes suivantes :

- identification du type de vêtement,
- recensement de toutes les mensurations nécessaires à la gradation de ce type de vêtement,
- identification des pièces de ce type de vêtement,
- sur chaque pièce de ce type de vêtement, identification des mensurations concernées, et leur passage par les points absolus,
- identification sur chaque pièce de la proportion en pourcentage de l'intervalle entre deux tailles de chaque mensuration, sa direction ; proportion que doit supporter la pièce pour passer d'une taille à la suivante,
- vérification de la cohésion dans le vêtement-type entier, pour chaque mensuration, que l'ensemble des proportions de l'intervalle de chaque mensuration appliquée aux différentes pièces affectent 100% de l'intervalle, et
- enregistrement en mémoire de masse de la taxonomie.

D'autre part, l'on peut modifier une taxonomie existante. Cette opération est avantageusement accessible à l'utilisateur et ne requiert aucune connaissance informatique.

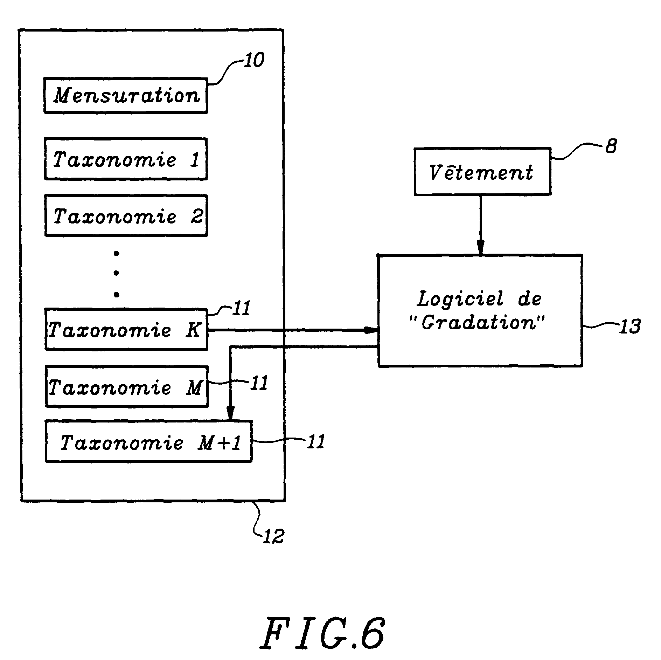

L'on peut par exemple modifier une taxonomie d'un vêtement voisin utilisable telle quelle dont on modifie ou on complète les paramètres pour créer un nouveau vêtement ou un nouveau style de vêtement. Dans l'exemple de la figure 6, l'on modifie la taxonomie numéro k pour créer une taxonomie numéro M + 1. Le gradeur modifie, grâce à un éditeur de textes, une boîte de dialogue, et/ou graphiquement, les éléments de la taxonomie. Il affecte un nom à la nouvelle taxonomie, et change, par exemple, la répartition de la variation entre tailles entre les diverses pièces du vêtement.

De même, on crée une taxonomie pour vestes à carreaux pour femmes en enrichissant une taxonomie pour vestes pour femmes, de manière à ce que la gradation offre des tailles de vêtement dont chaque pièce est découpée, chaque fois que cela est possible, uniquement le long des lignes séparant des carreaux.

En variante, l'utilisateur final peut créer de nouvelles taxonomies en modifiant les répartitions des intervalles de mensurations sur les diverses pièces du vêtement-type et ceci, en changeant la valeur du pourcentage de l'intervalle appliqué à une pièce du vêtement (incrément de la mensuration appliqué à la pièce).

La nouvelle taxonomie obtenue a la même constitution que la taxonomie de base. Seules les répartitions en pourcentage de l'intervalle des mensurations sur les pièces du vêtement peuvent avoir été altérées.

Dans un tel cas, on limite la possibilité de créer des taxonomies qui conduiraient à une gradation de mauvaise qualité.

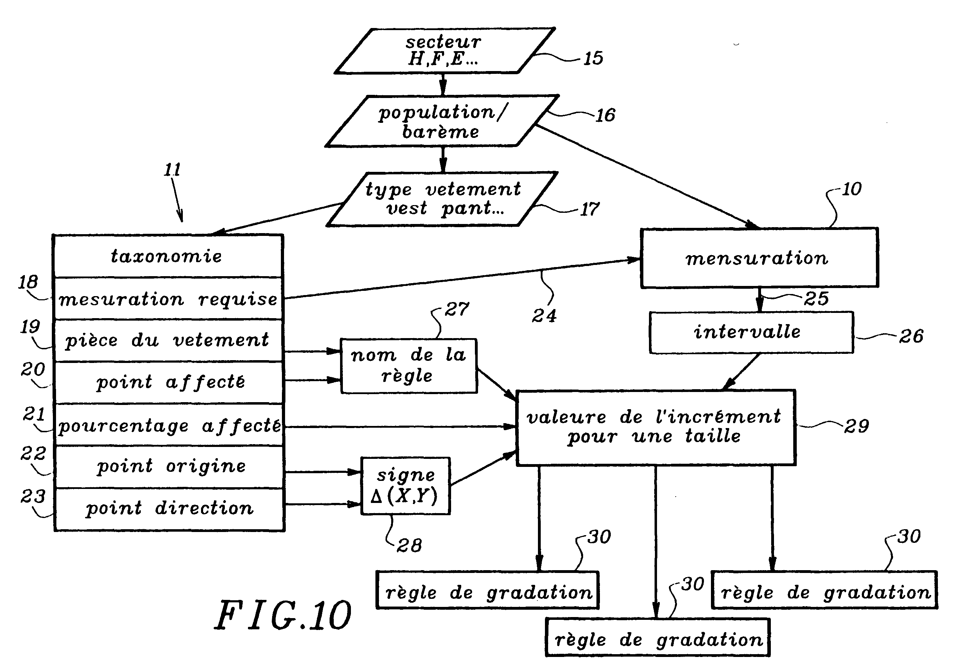

Un affichage graphique avantageux d'une taxonomie 11 est illustré sur la figure 7 appliqué à une pièce 80 d'un vêtement type. Les rectangles 81 illustrent les variations des diverses dimensions avec la taille suivant les valeurs du barème de vêtement 10. La taxonomie 11 assure la répartition de ces variations sur les divers points caractéristiques du vêtement.

Pour modifier une taxonomie, le gradeur sélectionne un des rectangles 81 de la taxonomie à modifier et indique au système informatique le nouveau pourcentage affecté de la variation des dimensions (fonction de la taille) à cet endroit de la pièce 80. Ces indications sont par exemple saisies au clavier ou indiquées avec un dispositif de pointage, par exemple une tablette graphique ou une souris.

La visualisation du résultat de la taxonomie ainsi modifiée permet une appréciation visuelle par le gradeur. L'affichage de la figure 7 sera également avantageusement réalisé par le gradeur pour effectuer le choix d'une taxonomie à utiliser pour grader un vêtement.

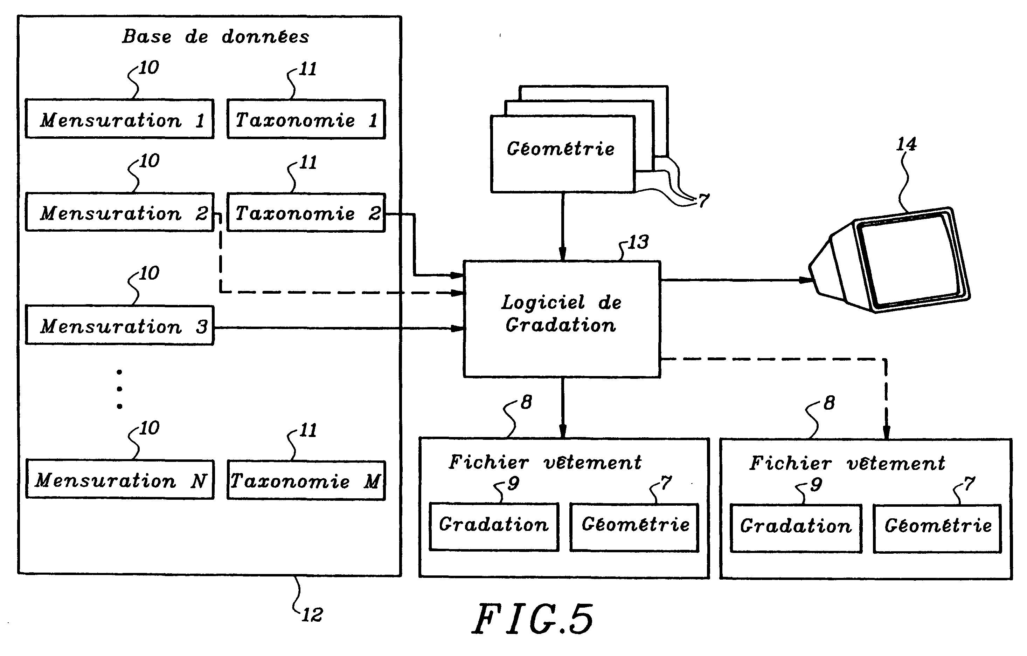

Avantageusement, comme illustré sur la figure 5, le système informatique selon la présente invention est livré au client avec les taxonomies 11 des vêtements courants, du ou des secteur(s) d'activités désiré(s) par le client. De même, un ou plusieurs barème(s) de mensuration 10 est(sont) fourni(s) avec le système. Avantageusement, les barèmes de mensuration 10 et les taxonomies 11 sont regroupés dans une base de données 12. Il est bien entendu que la base de données 12 peut être, comme illustré sur la figure 6, enrichie avec de nouvelles taxonomies.

Sur la figure 8, l'on peut voir un exemple d'enrichissement de la base de données 12 avec une nouvelle taxonomie 11.

En 160, le gradeur indique les secteurs d'activités de la taxonomie.

L'on va en 61.

En 61, il indique les tailles du barème à vérifier.

L'on va en 62.

En 62, le gradeur sélectionne un barème de mensuration 10 qui servira de base à la création de la nouvelle taxonomie.

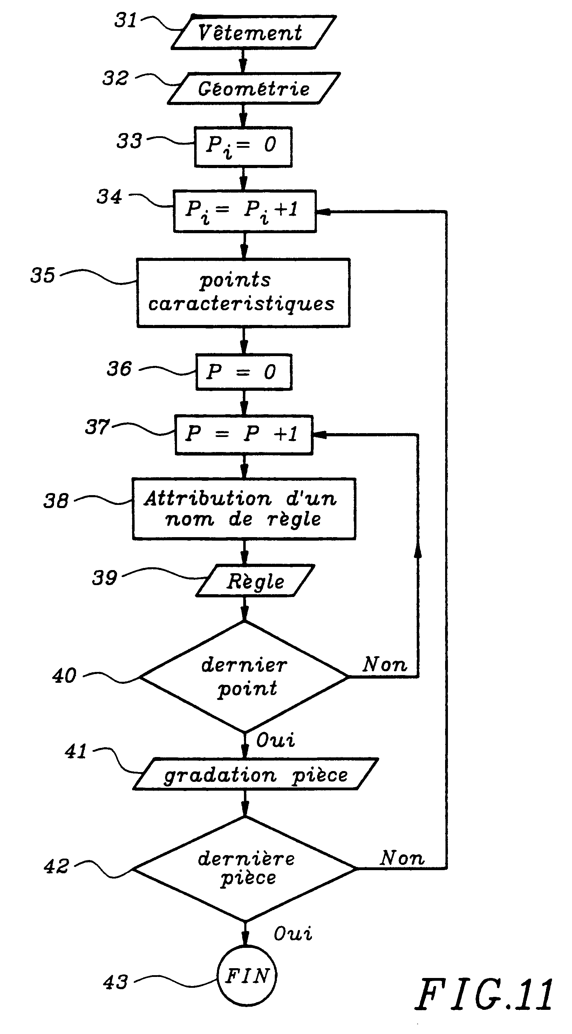

En 63, le gradeur sélectionne un vêtement qui servira de base à la création de la nouvelle taxonomie. Avantageusement, il s'agit d'un vêtement théorique ; une pièce d'un exemple d'un tel vêtement théorique est illustrée sur la figure 11.

L'on va en 64.

En 64, le logiciel 13 selon la présente invention communique au système d'exploitation de la station graphique une requête de chargement en mémoire centrale, à partir d'une mémoire de masse et/ou d'une base de données des fichiers de description des diverses pièces du vêtement théorique.

L'on va en 65.

En 65, le gradeur sélectionne une taxonomie 11 à modifier.

L'on va en 66.

En 66, le logiciel 13 selon la présente invention communique au système d'exploitation de la station graphique une requête de chargement en mémoire centrale, à partir d'une mémoire de masse et/ou d'une base de données de la taxonomie 11 à modifier.

L'on va en 67.

En 67, le logiciel 13 selon la présente invention effectue l'affectation des incréments sur le vêtement sélectionné avec la taxonomie à modifier.

L'on va en 68.

En 68, le logiciel 13 selon la présente invention affiche sur le moniteur 14 pour les diverses tailles, le vêtement théorique, enrichi des valeurs des incréments 81 comme illustré sur la figure 11.

L'on va en 69.

En 69, le logiciel 13 selon la présente invention demande au gradeur s'il veut valider la nouvelle taxonomie.

Si non, l'on va en 70.

En 70, le gradeur modifie la taxonomie, par exemple en modifiant la répartition des incréments entre les diverses pièces du vêtement et entre les divers points caractéristiques du vêtement. Ces modifications sont communiquées à la station graphique par l'intermédiaire d'une boîte de dialogue, d'un éditeur de textes, ou à la souris.

L'on va en 67.

Si oui, l'on va en 71.

En 71, le logiciel 13 selon la présente invention demande au gradeur s'il désire enregistrer la nouvelle taxonomie.

Si oui, l'on va en 72.

En 72, le gradeur indique divers renseignements complémentaires et notamment le nom de la nouvelle taxonomie et le type de vêtement associé. Le logiciel 13 selon la présente invention communique au système d'exploitation de la station graphique une requête d'enregistrement en mémoire centrale et/ou dans la base de données 12 de la nouvelle taxonomie.

L'on va en 73.

Si non, l'on va en 73.

En 73, le logiciel 13 selon la présente invention demande au gradeur s'il désire créer une nouvelle taxonomie.

Si oui, l'on va en 160.

Si non, l'on va en 74.

En 74, l'on sort du module de création de nouvelles taxonomies du logiciel 13 selon la présente invention.

- Traitement des taxonomies :

Les taxonomies contiennent la description des relations au sein d'un type de vêtement. Une taxonomie contient la liste de toutes les mensurations impliquées dans la gradation de ce type de vêtement.

Elle contient la liste des points absolus impliqués dans chaque pièce en relation avec les mensurations (position, orientation).

Elle contient pour chaque pièce la proportion (pourcentage) d'un intervalle de mensuration entre deux tailles, à appliquer sur les points de cette pièce.

Les taxonomies peuvent être modifiées par exemple par la variation des répartitions en pourcentage des intervalles de mensuration sur les pièces du vêtement.

Le traitement et la modification des taxonomies peuvent être avantageusement effectués par un système expert.

Les taxonomies peuvent être enregistrées en tant que fichiers informatiques indépendants, en tant qu'enregistrement d'une base de données ou en tant qu'ensemble de règles de la base de règles et/ou des faits de la base de faits du système expert. Une règle générale s'appliquant à toutes les taxonomies est par exemple du type :

. Règle 1 :

Pour toute mensuration, la somme des incréments des pièces est égale à 100 % de l'intervalle du barème de mensuration correspondant.

Une règle applicable au secteur femme et aux vestes serait :

. Règle 2 :

Variation de l'incrément du devant du vêtement = - (en variation de l'incrément dos du vêtement)

Un exemple de règle pour une veste blazer pour homme serait :

. Règle 3 :

$$\text{Variation de l'incrément devant} = 50\ \%\ \text{de la variation de}$$

$$\text{l'incrément petit côté} + 50\ \%\ \text{de variation incrément dos.}$$

Un exemple de règle pour une taxonomie de vestes cavalières pour hommes serait :

. Règle 4 :

$$\text{Variation de l'incrément devant} = \text{variation de l'incrément dos ; variation de l'incrément petit côté} = 0\ \%.$$

Nous allons maintenant décrire la gradation, illustrée sur la figure 5, d'un vêtement, par exemple d'un pantalon. Le gradeur sélectionne le vêtement à grader. Le logiciel de gradation 13 charge en mémoire centrale de la station graphique, par l'intermédiaire du système d'exploitation, les géométries 7 de toutes les pièces du vêtement à grader. Le gradeur sélectionne le barème de vêtement 10 à appliquer, correspondant à la population visée et/ou au vêtement traité ainsi que la taxonomie 11 correspondant au pantalon. Dans l'exemple illustré sur la figure 5, le gradeur a choisi le barème de mensuration 10 numéro 3 et la taxonomie 11, numéro 2. A partir de ces données, le logiciel de gradation 12 élabore les gradations 9 du fichier du vêtement 8. Cette étape est entièrement automatique, dans la mesure où le logiciel calcule et/ou applique les règles aux divers points caractéristiques, tout au moins aux points absolus des pièces du vêtement. Les règles sont appliquées automatiquement dans la mesure où la taxonomie 11 incorpore l'information concernant le pourcentage des intervalles de tailles à affecter aux diverses pièces du vêtement.

Selon les populations visées, il peut être nécessaire de changer de barème de mensuration 10. Par exemple, les habitants de l'Europe Occidentale, des pays de l'Est ou de l'Asie n'ont pas nécessairement les mêmes valeurs de mensuration. Ainsi, pour un marché particulier, le gradeur sélectionne le barème de mensuration 10 numéro 2, pour générer un second fichier de vêtement 8 correspondant à un marché particulier.

Avantageusement, le logiciel 13, selon la présente invention, comporte des moyens pour visualiser, par exemple sur un écran à rayons cathodiques 14, l'apparence du vêtement gradé. Cette visualisation peut être réalisée, par exemple, avant la génération du fichier de vêtement 8 pour contrôler le résultat qui sera obtenu, et éventuellement rejeter une gradation ne donnant pas entièrement satisfaction.

Le logiciel identifie les points caractéristiques à grader de la pièce du vêtement.

Avantageusement, cette identification est entièrement automatique, dans la taxonomie, et consiste à lire les points affectés. Toutefois, le choix des points caractéristiques à grader, avec l'assistance du gradeur, ne sort pas du cadre de la présente invention.

Le procédé selon l'invention d'identification automatique des points caractéristiques dépend avantageusement de la structure et du contenu du fichier 7 mémorisant la géométrie du vêtement.

Dans le cas le plus favorable correspondant au fichier appelé "image de base" généré par les stations de conception assistée par ordinateur vendues par la Demanderesse, les fichiers mémorisant la géométrie comportent des indications sur la disposition des points caractéristiques du vêtement, mais sans identification (nom) de chaque point, ainsi que sur l'orientation de chaque pièce. Il suffit alors d'identifier sur la géométrie chaque point de la liste des points contenus dans la taxonomie 11. Les points peuvent être identifiés par leur position absolue ; cela ne présente pas des difficultés pour les points se trouvant au coin de la pièce du vêtement, comme par exemple WO1, WO3, WO4, WO2, A02 et A01 de la figure 9.

Avantageusement, les autres points sont identifiés par leur position relative par rapport à certains points déjà identifiés. Avantageusement, l'on vérifie la cohérence de la position des points identifiés à partir des informations sur les positions relatives incluses dans la taxonomie 11.

Par exemple, les points A03, A04 se trouvent à mi-distance entre les points A01 et A02. La ligne de côté relie les points A03, A04, H03, H04. La ligne de genoux est parallèle à la ligne des chevilles et se situe à une distance qui se déduit du barème de mensuration.

Dans le cas où le fichier 7 mémorisant la géométrie ne contient pas d'indication de l'orientation des pièces du vêtement, le logiciel du système informatique selon l'invention commence à identifier l'orientation des pièces du vêtement par des algorithmes connus de reconnaissance de forme bi-dimensionnelle, à partir d'informations contenues dans la taxonomie 11.

Les autres étapes sont semblables au procédé précédent.

En variante, la taxonomie comporte des géométries des diverses pièces du vêtement à traiter avec indication de la position des divers points caractéristiques. Les points caractéristiques du vêtement réel sont identifiés ou déterminés par homothétie et/ou, déformation assurant la superposition des contours des pièces théoriques et des pièces réelles du vêtement traité. Les points caractéristiques des pièces théoriques sont transportés sur les pièces réelles du vêtement. C'est-à-dire que dans le cas où le fichier 7 mémorisant la géométrie contient la position des points caractéristiques, le point du vêtement réel le plus proche du point correspondant du vêtement théorique de la taxonomie en hérite toutes les propriétés, et notamment son nom.

Sur la figure 10, l'on peut voir les mises en oeuvre du système selon la présente invention pour générer des règles applicables aux divers points absolus des diverses pièces d'un vêtement.

En 15, le gradeur sélectionne le secteur auquel appartient le vêtement à traiter. Il s'agit, par exemple, du secteur confection pour hommes, confection pour femmes ou confection pour enfants. Il est bien entendu que le logiciel peut être vendu par module et que seul un secteur peut être implémenté sur la station de travail. Dans un tel cas, l'on passe directement à l'étape 16 lors de laquelle le gradeur sélectionne un barème de mensuration 10 de la base de données. Ce barème correspond à une population cible pour laquelle on veut confectionner des vêtements avantageusement optimisés (intervalles réguliers). Avantageusement, le barème de mensuration sélectionné est chargé dans la mémoire centrale de la station de travail.

L'on passe à l'étape 17 lors de laquelle le gradeur sélectionne le type de vêtement à grader, par exemple une veste ou un pantalon. Le choix du gradeur provoque le chargement de la taxonomie associée au type de vêtement sélectionné. En variante, le gradeur choisit parmi une pluralité de taxonomies possibles correspondant, par exemple, à plusieurs styles de vestes.

Une taxonomie 11 comporte typiquement :

- le type du vêtement auquel elle est associée ;
- la liste 18 des mensurations pertinentes pour ce type de vêtement ;
- la liste 19 des pièces du vêtement ;
- la liste des points caractéristiques à grader de chaque pièce du vêtement ;
- les pourcentages 21 de la variation de la taille à affecter à chaque pièce du vêtement ;
- des informations sur l'orientation de la variation des dimensions de la pièce du vêtement au point traité. Dans l'exemple illustré, correspondant à la taxonomie du tableau 7, cette information est donnée par un vecteur comportant en point origine 22 un point de direction 23 ainsi que les signes de la variation et les projections sur l'axe des X et des Y illustrés en 28.

La colonne 8 de la taxonomie du tableau 7 indique le sens de variation des dimensions.

La colonne 9 de la taxonomie du tableau 7 indique l'axe correspondant à la variation des dimensions.

Il est bien entendu que la mise en oeuvre de taxonomies comportant une description différente de variation de points, et notamment une indication directe de l'orientation et du sens de la variation pour chaque point, par exemple en coordonnées cartésiennes ou en coordonnées polaires ne sort pas du cadre de la présente invention.

Une taxonomie 11 comporte donc des informations sur un type de vêtement. Ces informations peuvent être aussi bien mises en oeuvre pour utiliser les données contenues dans un barème de mensuration que pour suppléer à l'absence de certaines informations dans un barème.

**TABLEAU 7**

| POPULATION france | SECTEUR femmes | | | | TYPE VETEMENT jupe | | | |
| definition de la mesuree | pièce | mensuration | % appliqué | point absol ori | point absol dir | point affecté | signe | axe |
|---|---|---|---|---|---|---|---|---|
| ligne taille au milieu dev | dev | tour taille | 0 | W02 | W02 | W02 | 0 | Y |
| Grad totale hanche dev | dev | tour taille | 25 | W02 | W04 | W04 | + | Y |
| Ligne hanche milieu dev | dev | tr hanche | 0 | H02 | H02 | H02 | 0 | Y |
| grad totale hanche dev | dev | tr hanche | 25 | H02 | H04 | H04 | + | Y |
| ligne taille au milieu dos | dos | tour taille | 0 | W01 | W01 | W01 | 0 | Y |
| Grad totale hanche dos | dos | tour taille | 25 | W01 | W03 | W03 | - | Y |
| Ligne hanche milieu dos | dos | tr hanche | 0 | H01 | H01 | H01 | 0 | Y |
| grad totale hanche dos | dos | tr hanche | 25 | H01 | H03 | H03 | - | Y |
| Haut montant milieu dev | dev | montant | 100 | H02 | W02 | W02 | + | X |
| Haut montant coté dev | dev | montant | 100 | H04 | W04 | W04 | + | X |
| Haut montant milieu dos | dos | montant | 100 | H01 | W01 | W01 | + | X |
| Haut montant coté dos | dos | montant | 100 | H03 | W03 | W03 | + | X |
| Long totale milieu dev | dev | tour taille | 100 | W02 | A02 | A02 | - | X |
| Long totale coté dev | dev | tour taille | 100 | W04 | A04 | A04 | - | X |
| Long totalemilieu dos | dos | tour taille | 100 | W01 | A01 | A01 | - | X |
| Long totale coté dos | dos | tour taille | 100 | W03 | A03 | A03 | - | X |

A partir des mensurations pertinentes 18 du vêtement traité, l'on effectue en 24 l'extraction à partir du barème de mensuration 10 des mensurations pertinentes correspondant aux diverses tailles du vêtement

En 25, on calcule l'intervalle correspondant à la différence entre la mensuration traitée pour deux tailles successives. En 29, on détermine la valeur de l'incrément pour une taille pour le point traité en multipliant l'intervalle calculé en 26 par le pourcentage affecté 21.

L'on donne un nom 27 à la règle de gradation associée à chaque point de chaque pièce du vêtement. Avantageusement, le nom 27 de la règle correspond au nom 20 du point traité. Ainsi, l'affectation des règles peut être effectuée de façon automatique, comme on peut le voir sur la figure 14.

Le calcul des incréments pour un point et pour toutes les tailles permet l'élaboration de la règle de gradation 30 pour ce point. Ainsi, l'on élabore l'ensemble des règles de gradation pour tous les points caractéristiques d'un vêtement.

Il est bien entendu que le calcul direct des règles de gradation 30 pour chaque point d'un vêtement, sans calculer la valeur de l'incrément 29 de tous les points pour chaque taille, ne sort pas du cadre de la présente invention.

Sur la figure 11, l'on peut voir un exemple d'attribution des règles à divers points des diverses pièces d'un vêtement.

En 31, le gradeur indique au système de gradation selon la présente invention le nom du vêtement à grader. L'on va en 32.

En 32, le logiciel de gradation 12 selon la présente invention lance au système d'exploitation de la station graphique une requête du chargement en mémoire centrale des géométries 7 des diverses pièces du vêtement.

L'on va en 33.

En 33, l'on initialise le compteur Pi des pièces du vêtement à traiter.

L'on va en 34.

En 34, l'on incrémente le compteur des pièces du vêtement traité et l'on charge la géométrie de la pièce traitée.

L'on va en 35.

En 35, le logiciel identifie les points caractéristiques à grader de la pièce du vêtement.

L'on va en 36.

En 36, l'on initialise le compteur P des points à grader de la pièce à grader.

L'on va en 37.

En 37, l'on incrémente le compteur des points à grader.

L'on va en 38.

En 38, l'on attribue au point à traiter le nom de la règle correspondante.

Dans le cas avantageux où les points affectés et les règles correspondantes portent les mêmes noms, l'affectation automatique des règles se réduit à une lecture et à une écriture. Toutefois, l'attribution d'une règle par le gradeur, ou la reconnaissance automatique des points, notamment par l'analyse de la géométrie de la pièce à traiter, et des règles à y affecter ne sortent pas du cadre de la présente invention.

L'on va en 39.

En 39, le logiciel 13 selon la présente invention lance au système d'exploitation de la station graphique une requête de lecture dans la mémoire de masse et/ou dans la base de données de la règle attribuée au point traité.

L'on va en 40.

En 40, l'on vérifie si l'on était en train de traiter le dernier point caractéristique de la pièce du vêtement.

Si non, l'on va en 37.

Si oui, l'on va en 41.

En 41, le logiciel de gradation 13 selon la présente invention permet à l'opérateur de lancer une requête au système d'exploitation de la station graphique d'enregistrement dans le fichier de vêtement 8 de la gradation de la pièce de vêtement traitée comportant les règles des divers points caractéristiques de la pièce traitée.

Il est bien entendu que la mise en oeuvre de l'étape 41 d'attribution des règles, après l'étape 39 ne sort pas du cadre de la présente invention.

L'on va en 42.

En 42, l'on vérifie si l'on était en train de traiter la dernière pièce du vêtement.

Si non, l'on va en 34.

Si oui, l'on va en 43.

En 43, l'on a fini de grader le vêtement.

L'on vérifie s'il existe d'autres vêtements à traiter, ou l'on sort de ce module du logiciel 13 selon la présente invention.

Sur la figure 9, l'on peut voir une représentation graphique de l'affectation des règles 9 aux divers points absolus de deux pièces d'une jupe longue. Deux autres pièces symétriques complètent le côté opposé de la jupe (non représentées).

Le système selon l'invention permet aussi bien la gradation par lots comportant une première étape de détermination des règles à affecter et une seconde étape d'affectation au point du vêtement, avantageusement automatiquement, de ces règles que la gradation dynamique avec détermination des règles directement pour chaque point affecté du vêtement. La gradation par lots peut être plus rapide dans la mesure où l'on peut réutiliser sur plusieurs vêtements des règles préalablement calculées. Elle donne d'excellents résultats chaque fois que les points du vêtement ne subissent pas des évolutions complexes.

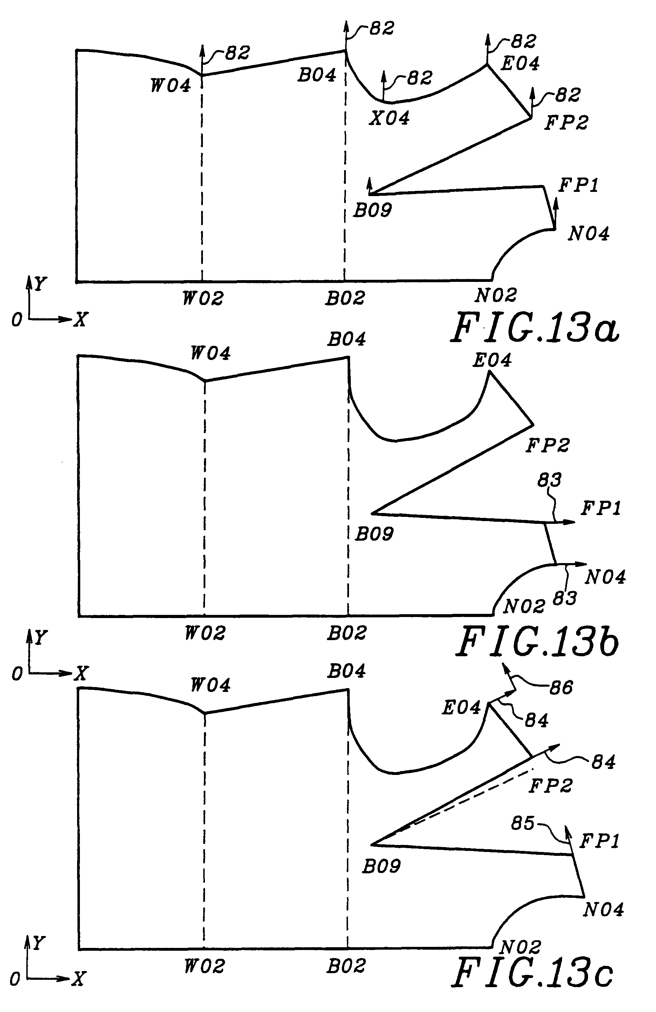

La gradation dynamique donne d'excellents résultats dans tous les cas, y compris lorsque certains points du vêtement doivent subir des évolutions complexes, notamment dans les vêtements comportant des pinces P. Un exemple de gradation dynamique pour un vêtement comportant des pinces est illustré sur la figure 13. Dans l'exemple illustré, l'incrément total pour chaque point gradé est égal à la somme vectorielle des incréments élémentaires suivant les divers axes affectés au point traité.

Sur la figure 13a, on effectue une gradation en largeur en affectant les incréments 82 aux points WO4, BO4, XO4, EO4, FP1, FP2 et NO4. Cette gradation est effectuée selon la présente invention en appliquant suivant l'axe des Y le pourcentage indiqué dans la taxonomie de l'incrément concerné sur chaque point affecté.

Sur la figure 13b, on peut voir la gradation en longueur selon l'axe X. Les incréments 83 ont été affectés aux points FP1 et NO4 correspondant à la variation de dimensions du buste. Cette variation est donnée dans un barème des mensurations 10 par la mesure de distance entre la septième cervicale et la taille prise dans le dos. Le barème des mensurations 10 peut également comporter une mensuration sur le devant. Dans le cas contraire, la taxonomie indique la façon de déduire cette information à partir de l'information disponible dans le barème de mensuration 10. Par exemple, pour un vêtement féminin la taxonomie indique que l'incrément pour le devant doit être égal à 1,5 fois l'incrément pour le dos, qui lui est toujours disponible dans le barème de mensurations 10. On voit ainsi que le système selon la présente invention, de part la connaissance du vêtement incorporé dans les taxonomies permet, non seulement de mieux utiliser les données disponibles, mais de grader même dans le cas où certains renseignements ne sont pas disponibles dans le barème de mensurations 10.

Dans la mesure où le repère OXY est un repère orthonormé, la gradation selon l'axe des X est complètement indépendante de la gradation selon l'axe des Y. Ainsi, on aurait pu intervertir les deux étapes de gradation en largeur de la figure 13a et l'étape de gradation en longueur de la figure 13b.

Par contre, il est avantageux de réaliser la gradation selon les autres axes tels qu'illustrés sur la figure 13c après les gradations en longueur et en largeur. On affecte l'incrément 84 au point FP2 qui a déjà été gradé en largeur (incrément 82). Ainsi, l'incrément 84 est aligné selon l'axe BO9 FP2 de la figure 13c qui n'est pas identique à l'axe BO9 FP2 de la figure 13a qui est indiqué en pointillé sur la figure 13c, la gradation du point EO4 est ensuite effectuée parallèlement à l'axe BO9 FP2 de la figure 13c à partir de la position du point EO4 de la figure 13c (tenant compte de l'incrément 82). La présence de la pince P implique que l'augmentation de la largeur de l'épaule au point FP1 devra être effectuée selon l'axe NO4 FP1 (incrément 85), alors qu'au FP2, elle devra être effectuée selon l'axe FP2 EO4 (incrément 86). Par exemple, la moitié de l'intervalle doit être affectée au point FP1, l'autre moitié étant affectée au point EO4.

L'orientation de l'axe NO4 FP1 n'est pas nécessairement le même que celui sur la figure 13b dans la mesure où les incréments 83 reçus par les points FP1 et NO4 ne sont pas nécessairement les mêmes.

La gradation du reliquat de la largeur de l'épaule (50% dans les cas présents) forme l'incrément 86 au point EO4 suivant l'axe FP2 et EO4 tenant compte des modifications résultant des incréments 84.

Il est bien entendu que l'on peut effectuer le calcul dans l'ordre inverse. En un tel cas, l'orientation des incréments 84 devra tenir compte des modifications apportées par l'incrément 86.

Les incréments résultant de cette gradation peuvent être convertis dans diverses notations mathématiques et notamment être projetés sur les axes X et Y

La méthode illustrée sur la figure 13 permet d'améliorer sensiblement la qualité de la gradation en générant des règles de gradation optimisées pour chaque point dans le cas de l'évolution complexe de la surface bi-dimensionnelle du vêtement pour suivre l'évolution de l'enveloppe des individus avec la taille. Il en résulte des vêtements de meilleure qualité.

Dans l'exemple préféré du système selon la présente invention, on a adopté un repère XY d'axes privilégiés, l'axe X correspondant par exemple à la longueur du vêtement, l'axe Y étant perpendiculaire à l'axe X. Ainsi, les calculs des gradations ont été simplifiés dans le cas d'évolution normale des points absolus du vêtement avec la taille. De plus, on reprend ainsi la démarche adoptée dans le système CAO au vêtement existant, notamment dans le système CAO vêtement vendu par la Demanderesse. Toutefois, il est bien entendu que la mise en oeuvre d'un système informatique sans axe privilégié ne sort pas du cadre de la présente invention. Dans un tel cas, on mettra en oeuvre la composition des incréments, selon des axes quelconques par addition des vecteurs, en tenant compte de l'orientation desdits vecteurs, comme illustré sur la figure 13c. Le surcroît de calcul est dans un tel cas supporté par les stations de travail comportant un ou plusieurs microprocesseur(s) moderne(s) de grande puissance de calcul.

De même, les règles de gradation peuvent être déterminées par le système expert mettant en oeuvre des règles du type :

Règle 1 :

Incrément sur point absolu = (intervalle de mensuration du

barème pour taille courante) x (% appliqué sur la pièce).

. Règle 2 :

Axe incrément = direction et sens de (point direction-point origine).

Si axe incrément = axe X alors

incrément en X = incrément axe et incrément Y = 0

ou

si axe incrément = axe Y alors

incrément en Y = incrément axe et incrément en X = 0.

Règle 3 :

Si (axe incrément différent axe X et axe incrément différent axe Y), alors gradation dynamique : rechercher axe incrément sur la pièce par points absolu origine, point absolu direction.

Incrément en X = projection sur axe X (valeur incrément suivant axe incrément).

Incrément en Y = projection sur axe Y (valeur incrément suivant axe incrément).

Règle 4 :

(j = 0) est la taille de référence.

Variation X (taille i) = somme (j = 0 à i) incrément X (taille j).

Variation Y (taille i) = somme (j = 0 à i) incrément en Y (taille j).

Le système expert peut être développé dans un langage d'intelligence artificielle disponible dans le commerce ou avantageusement avec un système générateur de système expert également disponible dans le commerce.

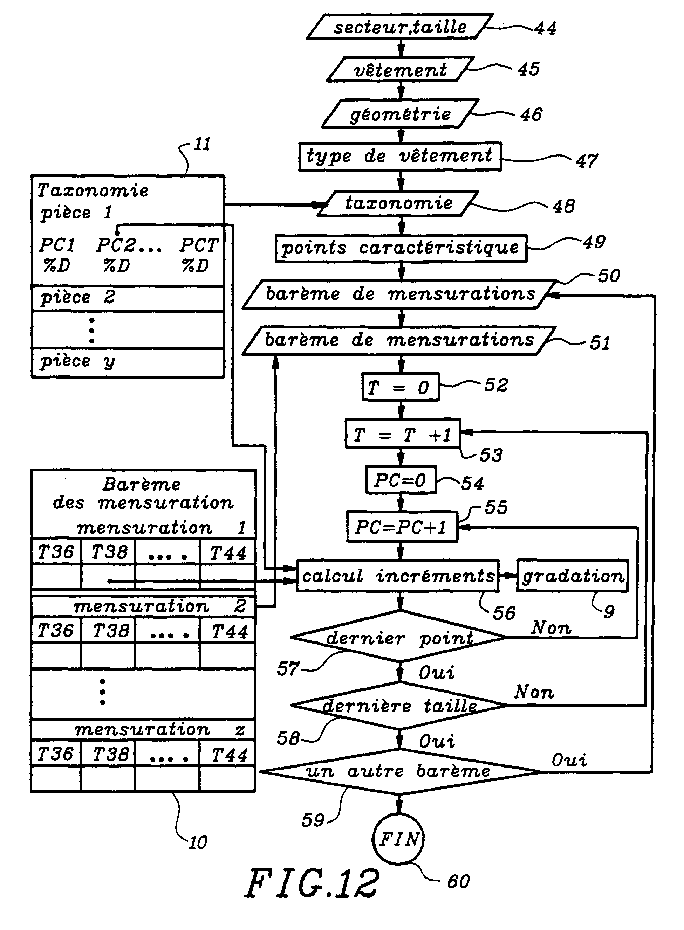

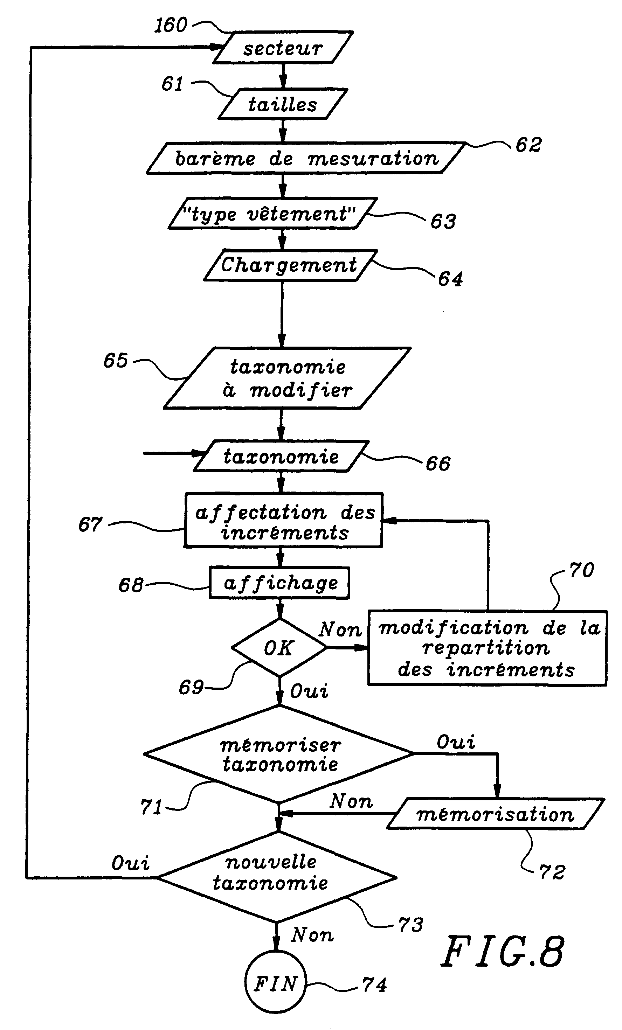

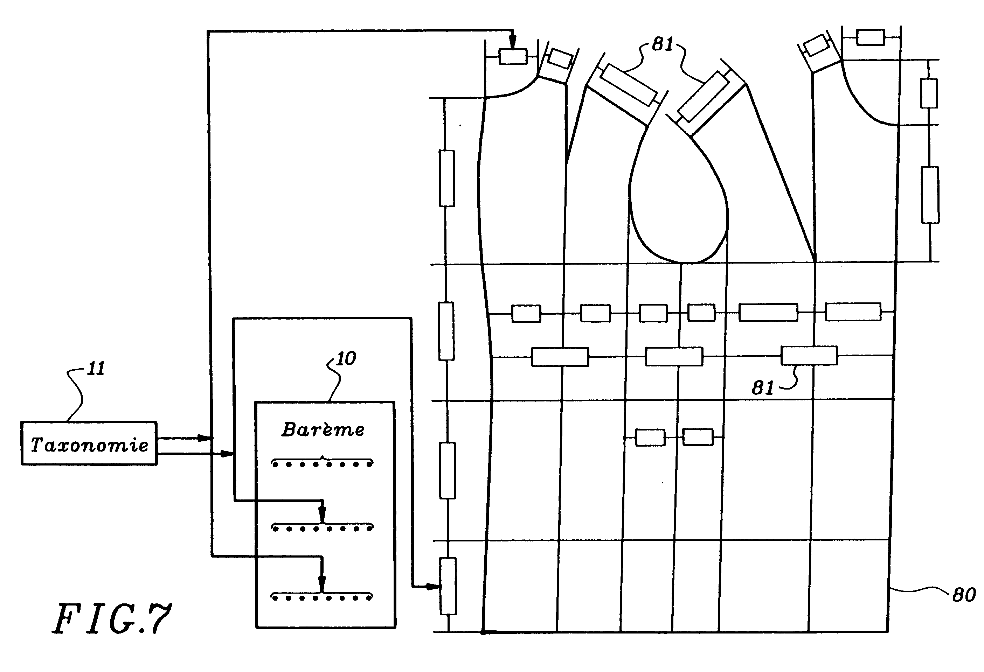

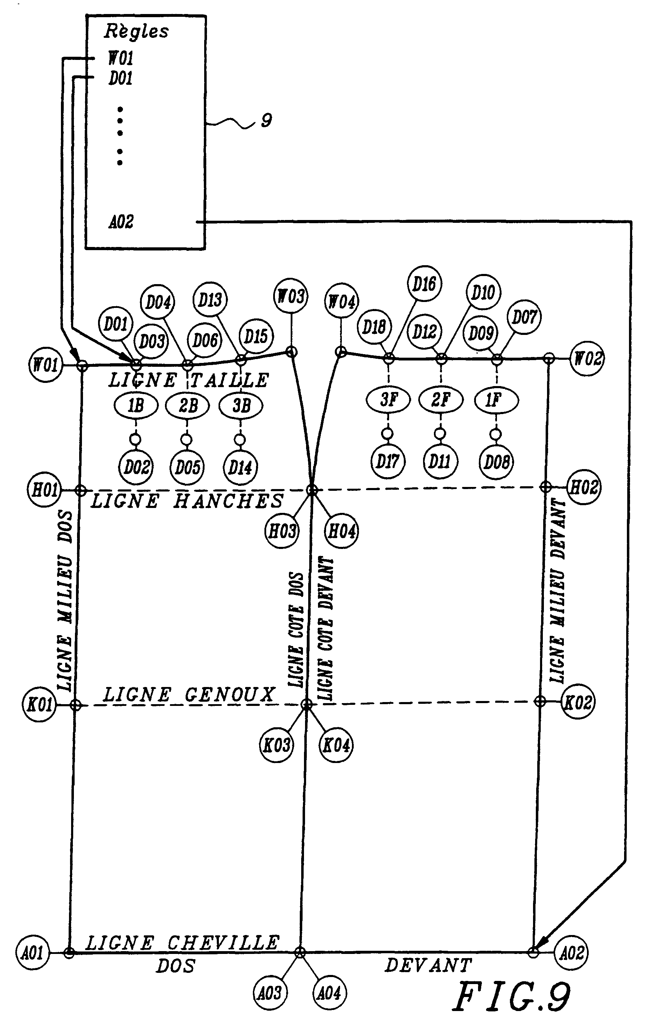

Sur la figure 12, l'on peut voir la gradation d'un vêtement avec un second exemple de réalisation d'un système de gradation selon la présente invention.
En 44, le gradeur indique au système informatique le secteur dans lequel il travaille et les tailles qu'il veut réaliser.
L'on va en 45.

En 45, le gradeur indique au système informatique le nom du vêtement à grader. Avantageusement, le gradeur clique sur le nom d'un fichier de vêtement à grader, avec un dispositif de pointage, par exemple de type souris.

L'on va en 46.

En 46, le logiciel 13 selon la présente invention communique au système d'exploitation de la station graphique, une requête de chargement en mémoire centrale, à partir d'une mémoire de masse et/ou d'une base de données des fichiers de description de la géométrie des diverses pièces du vêtement à traiter.

L'on va en 47.

En 47, le logiciel 13 selon la présente invention communique au système d'exploitation de la station graphique, une requête de chargement en mémoire centrale, à partir d'une mémoire de masse et/ou d'une base de données de la taxonomie 11 correspondant au type de vêtement à grader.

L'on va en 48.

En 48, le logiciel 13 selon la présente invention détermine, avantageusement de façon automatique et/ou par la lecture de la taxonomie, les points caractéristiques auxquels l'on doit attribuer une règle de gradation.

L'on va en 49.

En 49, le logiciel de gradation selon la présente invention détermine, avantageusement, de façon automatique, les points caractéristiques auxquels l'on devra appliquer les règles de gradation.

L'on va en 50.

En 50, le gradeur indique au système informatique de gradation selon la présente invention le barème de mensuration 10 à mettre en oeuvre.

L'on va en 51.

En 51, le logiciel 13 selon la présente invention, communique au système d'exploitation de la station graphique une requête de chargement en mémoire centrale, à partir d'une mémoire de masse et/ou d'une base de données du barème de mensuration 10 sélectionné.

L'on va en 52.

En 52, l'on initialise le compteur des tailles à grader.

L'on va en 53.

En 53, l'on incrémente le compteur des tailles gradées.

L'on va en 54.

En 54, l'on initialise le compteur des points caractéristiques des diverses pièces du vêtement à grader.

L'on va en 55.

En 55, l'on incrémente le compteur des points caractéristiques traités et l'on recherche dans la taxonomie l'information correspondant au point caractéristique courant déterminé en 48.

L'on va en 56.

En 56, le logiciel 13 de gradation selon la présente invention calcule l'incrément du point traité pour la taille traitée. Le logiciel 13 selon la présente invention extrait du barème de mensuration 10 la mensuration correspondant aux points traités pour la taille traitée, par exemple la mensuration 1 pour la taille 38, dans l'exemple illustré ainsi que pour la taille adjacente ou la taille de référence, et extrait de la taxonomie 11 mise en oeuvre les données à appliquer à ce point, par exemple le pourcentage de l'intervalle affecté et la direction de la variation de dimension de la pièce de vêtement. Le logiciel 13 selon la présente invention calcule l'incrément à affecter au point en fonction de la taille, ainsi qu'éventuellement sa projection sur les axes X et des Y. Avantageusement, l'incrément calculé pour le point est stocké dans la gradation 9 du fichier 8 de vêtement.

L'on va en 57.

En 57, l'on détermine si l'on est en train de traiter le dernier point du vêtement.

Si non, l'on va en 55.

Si oui, l'on va en 58.

En 58, l'on détermine si l'on a traité la dernière taille de la gradation.

Si non, l'on va en 53.

Si oui, l'on va en 59.

En 59, le logiciel interroge le gradeur s'il désire appliquer un autre barème de mensuration au vêtement.

Si oui, l'on va en 50.

Si non, l'on va en 60.

En 60, l'on a terminé la gradation du vêtement.

Le gradeur peut grader un autre vêtement ou sortir du logiciel 13 selon la présente invention.

Le système informatique selon la présente invention permet aussi bien une gradation entièrement automatique d'un fichier de vêtement qu'un fonctionnement interactif avec validation par le gradeur à chaque étape. Dans le premier cas, le gradeur introduit ou sélectionne le barème à utiliser, sélectionne la taxonomie à utiliser et fournit un système le fichier de la géométrie de base. Eventuellement, il enrichit le barème sélectionné avec des contraintes à imposer au vêtement, par exemple la longueur des manches ou la longueur de la veste pour les diverses tailles. Une fois le calcul effectué, le système a généré la gradation du vêtement.

Dans le second cas, un gradeur expérimenté peut contrôler et valider chaque étape de la gradation. De même, un gradeur moins expérimenté peut suivre les étapes du déroulement de la gradation dans un but pédagogique et de formation.

Le système informatique de gradation selon la présente invention est, par exemple, implémenté dans les stations graphiques de conception de vêtement assistée par ordinateur.

**Revendications**

1. Système informatique de gradation de vêtements comportant :

   - une unité centrale ;
   - des moyens d'affichage (14) ;
   - des moyens d'entrée/sortie ; et
   - des moyens de mémorisation mémorisant un système d'exploitation ;

   **caractérisé en ce que** :

   d) la mémoire centrale de l'ordinateur mémorise :

   - la description des géométries des diverses pièces d'un vêtement à grader ;
   - un barème de mensuration (10) **établi à partir d'une étude statistique sur les mensurations d'une population cible ; et**
   - une relation (11) entre les déplacements des points caractéristiques des pièces du vêtement à grader et des variations des mensurations avec la taille du vêtement, comportant une information concernant le pourcentage (21) de la variation de la taille à affecter à chaque point caractéristique de chaque pièce du vêtement, et une information concernant l'orientation à donner au déplacement des points caractéristiques.

   e) l'unité centrale comporte des moyens :

   - pour calculer les intervalles entre les mensurations des tailles consécutives du vêtement ; et
   - pour déduire de la relation (11), entre les déplacements des points caractéristiques des pièces d'un vêtement et les variations des mensurations avec la taille et du barème de mensuration (10) modifié de façon à répartir uniformément les variations d'au moins une mensuration entre des tailles consécutives sur au moins une plage des tailles comportant au moins trois tailles consécutives, les règles de gradation à appliquer aux divers points caractéristiques des diverses pièces du vêtement à grader ; et
   - pour appliquer lesdites règles de gradation déterminées par ladite unité centrale aux divers points caractéristiques correspondants du vêtement ;

   f) une mémoire de masse et/ou une base de données mémorise les gradations appliquées par l'unité centrale.

2. Système informatique de gradation de vêtements, selon la revendication 1, **caractérisé en ce que** le logiciel (13) est susceptible de mettre en oeuvre une même relation (11) entre les déplacements des points caractéristiques des pièces d'un vêtement et les variations des mensurations avec la taille, avec une pluralité de barèmes de mensuration (10) pour en déduire une pluralité de gradations d'un vêtement.

3. Système informatique selon la revendication 1 ou 2, **caractérisé en ce que** le logiciel (13) de gradation comporte des moyens pour créer de nouvelles relations (11) entre les déplacements des points caractéristiques des pièces d'un vêtement et les variations des mensurations avec la taille.

4. Système informatique selon l'une quelconque des revendications précédentes, **caractérisé en ce qu'**il comporte une base de données (12) stockant au moins un barème de mensuration (10) et au moins une relation (11) entre les déplacements des points caractéristiques des pièces d'un vêtement et les variations des mensurations avec la taille.

5. Système informatique selon l'une quelconque des revendications précédentes, **caractérisé en ce qu'**on utilise comme point caractéristique des pièces d'un vêtement, les points devant être en vis à vis avec les points de mesure d'un tableau de mensuration (10).

6. Système informatique selon l'une quelconque des revendications précédentes, **caractérisé en ce qu'**il comporte un interface, notamment un interface graphique, comportant des menus de dialogue avec le gradeur.

7. Système informatique selon l'une quelconque des revendications précédentes, **caractérisé en ce qu'**il comporte des moyens pour afficher sur un écran graphique des pictogrammes représentant les données nécessaires au traitement, du type secteur d'activité, mensurations, types de vêtements..., des moyens de pointage par l'opérateur des divers éléments graphiques affichés et des moyens d'interprétation de ces pointages comme des instructions ou commandes du système informatique.

8. Système informatique selon la revendication 6 ou 7, **caractérisé en ce qu'**il comporte un menu offrant au gradeur le choix de la relation (11) à mettre en oeuvre entre les déplacements des points caractéristiques des pièces d'un vêtement et les variations des mensurations avec la taille disponible dans le système.

9. Système informatique selon la revendication 6, 7 ou 8, **caractérisé en ce qu'**il comporte un menu offrant au gradeur le choix du barème de mensuration (10) à mettre en oeuvre.

10. Système informatique selon l'une quelconque des revendications précédentes, **caractérisé en ce qu'**il comporte des moyens (13, 14) d'affichage graphique du résultat de la gradation.

11. Système informatique selon l'une quelconque des revendications précédentes, **caractérisé en ce que** l'unité centrale est une station graphique de conception de vêtements assistée par ordinateur.

12. Système informatique de gradation selon l'une quelconque des revendications précédentes, **caractérisé en ce que** les moyens de mémorisation mémorisent des tolérances admissibles dans la modification du barème de mensuration (10) et **en ce qu'**il comporte des moyens pour interdire une modification dépassant lesdites tolérances admissibles.

13. Système informatique selon l'une quelconque des revendications précédentes, **caractérisé en ce qu'**il comporte des moyens pour modifier les relations (11) entre les déplacements des points caractéristiques des pièces d'un vêtement et les variations de mensuration avec la taille du vêtement, notamment pour modifier les pourcentages des déplacements affectés aux divers points caractéristiques.

14. Système informatique selon l'une quelconque des revendications 1 à 13, **caractérisé en ce qu'**il comporte des moyens pour affecter à chaque point caractéristique du vêtement à grader la règle qui comporte le même nom que le nom affecté audit point caractéristique.

15. Système informatique selon l'une quelconque des revendications précédentes, **caractérisé en ce qu'**il comporte des moyens, notamment un système expert, pour reconnaître l'emplacement des divers points caractéristiques sur les diverses pièces du vêtement pour leur attribuer les noms correspondants.

16. Système informatique de gradation de vêtements selon l'une quelconque des revendications précédentes, **caractérisé en ce qu'**il comporte des moyens d'élaboration de règles de gradation directement sur les pièces d'un vêtement, **en ce qu'**un point caractéristique d'une pièce du vêtement peut subir une pluralité de déplacements et **en ce qu'**il comporte des moyens pour déterminer le déplacement résultant de cette pluralité de déplacements.

17. Système informatique de gradation de vêtements selon la revendication 1, **caractérisé en ce qu'**il comporte un système expert comprenant une base de connaissance dans laquelle sont mémorisées des relations (11) entre les déplacements des points caractéristiques des pièces d'un vêtement et les variations des mensurations avec la taille du vêtement.

18. Système informatique de gradation de vêtement selon l'une quelconque des revendications précédentes, **caractérisé en ce qu'**il comporte un système expert assurant l'uniformisation de la répartition des intervalles entre les diverses tailles d'un barème et **en ce que** le système expert propose au gradeur le barème uniformisé optimal.

19. Système informatique de gradation de vêtements selon la revendication 17 ou 18, **caractérisé en ce que**, dans le cas où le barème à utiliser pour effectuer la gradation ne comporte pas certaines mensurations pertinentes, le système expert les détermine à partir d'autres mensurations du même barème.

**20.** Système informatique de gradation de vêtements selon l'une quelconque des revendications précédentes, **caractérisé en ce qu'**il comporte un système expert assurant la reconnaissance des points caractéristiques d'un vêtement à grader.

**21.** Système informatique selon la revendication 20, **caractérisé en ce que** le système expert comporte une base comprenant des relations (11) entre les déplacements des points caractéristiques des pièces d'un vêtement et les variations de mensuration avec la taille du vêtement, et **en ce qu'**il en déduit les règles de gradation à appliquer aux divers points caractéristiques du vêtement à grader, et **en ce qu'**il applique les règles de gradation aux points caractéristiques reconnus.

**22.** Système selon l'une quelconque des revendications précédentes, **caractérisé en ce qu'**il effectue une gradation par lot déterminant les règles de gradation à affecter aux divers points caractéristiques des vêtements suivie par l'affectation des règles déterminées aux divers points caractéristiques correspondant des vêtements.

**23.** Système selon l'une quelconque des revendications 1 à 21, **caractérisé en ce qu'**il effectue une gradation dynamique avec détermination des règles de gradation directement pour chaque point affecté du vêtement avec affectation immédiate de la règle au point correspondant.

**24.** Procédé de gradation de vêtements mettant en oeuvre un système informatique selon l'une quelconque des revendications 1 à 23, **caractérisé en ce qu'**il comporte les étapes consistant à :

a) charger en mémoire centrale de l'ordinateur la description des géométries des diverses pièces d'un vêtement à grader, un barème de mensuration (10) établi à partir d'une étude statistique sur les mensurations d'une population cible, et une relation (11) entre les déplacements des points caractéristiques des pièces du vêtement à grader et des variations des mensurations avec la taille du vêtement comportant une information concernant le pourcentage (21) de la variation de la taille à affecter à chaque point caractéristique de chaque pièce du vêtement, et une information concernant l'orientation à donner au déplacement des points caractéristiques;
b) calculer les intervalles entre les mensurations des tailles consécutives du vêtement ;
c) déduire de la relation (11) entre les déplacements des points caractéristiques des pièces d'un vêtement et les variations des mensurations avec la taille et du barème de mensuration (10) modifié de façon à répartir uniformément les variations d'au moins une mensuration entre des tailles consécutives sur au moint une plage des tailles comportant au moins trois tailles consécutives, les règles de gradation à appliquer aux divers points caractéristiques des diverses pièces du vêtement à grader ;
d) appliquer les règles de gradation déterminées à l'étape c) aux divers points caractéristiques correspondants du vêtement :
e) mémoriser la gradation obtenue dans une mémoire de masse et/ou dans une base de données.

**25.** Procédé selon la revendication 24, **caractérisé en ce que** la gradation est effectuée par lot avec une première étape de détermination des règles de gradation à affecter aux divers points caractéristiques des vêtements suivie par une étape d'affectation des règles déterminées aux points caractéristiques correspondant des vêtements.

**26.** Procédé selon la revendication 24, **caractérisé en ce que** la gradation est effectuée dynamiquement avec, pour chaque point caractéristique du vêtement, la détermination de la régle de gradation à affecter étant immédiatement suivie par l'affectation de cette règle au point correspondant.

**Patentansprüche**

**1.** Informationssystem zur Bekleidungsabstufung, umfassend

a. eine Zentraleinheit

b. Anzeigemittel (14)

c. Ein-/Ausgabemittel; und

d. Speichermittel, die ein Betriebssystem speichern;
   **dadurch gekennzeichnet, daß**

i. der Zentralspeicher des Computers speichert:

1. die Beschreibung der Geometrien der verschiedenen Teile eines abzustufenden Kleidungsstücks;

2. eine Abmessungstabelle (10), die ausgehend von einer statistischen Untersuchung über die Abmessungen einer Zielbevölkerung etabliert ist; und

3. eine Beziehung (11) zwischen den Verschiebungen der charakteristischen Punkte der Teile des abzustufenden Kleidungsstücks und der Änderungen der Abmessungen mit der Kleidungsgröße, die eine Information umfasst, die den Prozentanteil (21) der Änderung der Größe betrifft, die jedem charakteristischen Punkt jedes Teils des Kleidungsstücks zuzuweisen ist, und eine Information umfasst, die die Orientierung betrifft, die der Verschiebung der charakteristischen Punkte zu geben ist,

ii. die Zentraleinheit Mittel umfasst:

1. zum Berechnen der Abstände zwischen den Abmessungen der aufeinanderfolgenden Kleidungsgrößen; und

2. zur Ableitung der auf die verschiedenen charakteristischen Punkte der verschiedenen abzustufenden Teile des Kleidungsstücks anzuwendenden Abstufungsvorschriften aus der Beziehung (11) zwischen den Verschiebungen der charakteristischen Punkte der Teile eines Kleidungsstücks und den Änderungen der Abmessungen mit der Größe und der Abmessungstabelle (10), die modifiziert ist, um die Änderungen wenigstens einer Abmessung zwischen aufeinanderfolgenden Größen über wenigstens einen Bereich der Größen gleichmäßig zu verteilen, der wenigstens drei aufeinanderfolgende Größen umfasst; und

3. um diese durch die Zentraleinheit bestimmten Abstufungsvorschriften auf die verschiedenen entsprechenden charakteristischen Punkte des Kleidungsstücks anzuwenden;

iii. ein Massenspeicher und/oder eine Datenbank die durch die Zentraleinheit zugeführten Abstufungen speichert

2. Informationssystem zur Bekleidungsabstufung nach Anspruch 1,
   **dadurch gekennzeichnet, daß**
   die Software (13) dazu geeignet ist, eine gleiche Beziehung (11) zwischen den Verschiebungen der charakteristischen Punkte der Teile eines Kleidungsstückes und den Änderungen der Abmessungen mit der Größe bei einer Vielzahl von Abmessungstabellen (10) zu verarbeiten, um daraus eine Vielzahl von Abstufungen eines Kleidungsstückes abzuleiten.

3. Informationssystem nach Anspruch 1 oder 2,
   **dadurch gekennzeichnet, daß**
   die Abstufungssoftware (13) Mittel zur Schaffung neuer Beziehungen (11) zwischen den Verschiebungen der charakteristischen Punkte der Teile eines Kleidungsstückes und den Änderungen der Abmessungen mit der Größe aufweist.

4. Informationssystem nach einem der vorhergehenden Ansprüche,
   **dadurch gekennzeichnet, daß**
   es eine Datenbank (12) aufweist, die wenigstens eine Abmessungstabelle (10) und wenigstens eine Beziehung (11) zwischen den Verschiebungen der charakteristischen Punkte der Teile eines Kleidungsstückes und den Änderungen der Abmessungen mit der Größe speichert.

5. Informationssystem nach einem der vorhergehenden Ansprüche,
   **dadurch gekennzeichnet, daß**
   als charakteristischer punkt der Teile eines Kleidungsstückes die Punkte benutzt werden, die gegenüber zu den Meßpunkten einer Abmessungstabelle (10) liegen müssen.

6. Informationssystem nach einem der vorhergehenden Ansprüche,
   **dadurch gekennzeichnet, daß**
   es eine Schnittstelle, insbesondere eine graphische Schnittstelle, enthält, die Menüs zum Dialog mit dem Abstufer enthält.

7. Informationssystem nach einem der vorhergehenden Ansprüche,
   **dadurch gekennzeichnet, daß**
   es Mittel zur Anzeige von Piktogrammen auf einem graphischen Bildschirm, welche die zur Verarbeitung notwendigen Daten des Wirkungsbereichstyps, der Abmessungen, der Kleidungsstückarten ... darstellen, Mittel zum Kontrollieren der verschiedenen angezeigten graphischen Elemente durch den Operateur und Mittel zur Interpretation dieser Kontrollen als Anweisungen oder Befehle des Informationssystems enthält.

8. Informationssystem nach Anspruch 6 oder 7,
   **dadurch gekennzeichnet, daß**
   es ein Menü enthält, das dem Abstufer die Wahl der zwischen den Verschiebungen der charakteristischen Punkte der Teile eines Kleidungsstückes und den Änderungen der Abmessung mit der im System verfügbaren Größe einzusetzenden Beziehung (11) dem Abstufer anbietet.

9. Informationssystem nach Anspruch 6, 7 oder 8,
   **dadurch gekennzeichnet, daß**
   es ein Menü enthält, das dem Abstufer die Wahl der zu verarbeitenden Abmessungstabelle (10) anbietet.

10. Informationssystem nach einem der vorhergehenden Ansprüche,
    **dadurch gekennzeichnet, daß**
    es Mittel (13, 14) zur graphischen Anzeige des Ergebnisses der Abstufung enthält.

11. Informationssystem nach einem der vorhergehenden Ansprüche,
    **dadurch gekennzeichnet, daß**
    die Zentraleinheit eine rechnergestützte Graphikstation zum Bekleidungsentwurf ist.

12. Informationssystem zur Abstufung nach einem der vorhergehenden Ansprüche,
    **dadurch gekennzeichnet, daß**
    die Speichermittel zulässige Toleranzen bei der Veränderung der Abmessungstabelle (10) speichern und daß es Mittel zum Sperren einer diese zulässigen Toleranzen überschreitenden Veränderung umfaßt.

13. Informationssystem nach einem der vorhergehenden Ansprüche,
    **dadurch gekennzeichnet, daß**
    es Mittel zur Veränderung der Beziehungen (11) zwischen den Verschiebungen der charakteristischen Punkte der Teile eines Kleidungsstückes und den Änderungen der Abmessung mit der Kleidungsgröße enthält, insbesondere zur Veränderung des Prozentsatzes der an verschiedene charakteristische Punkte zugewiesenen Verschiebungen.

14. Informationssytem nach einem der Ansprüche 1 bis 13,
    **dadurch gekennzeichnet, daß**
    es Mittel aufweist, um jedem charakteristischen Punkte des abzustufenden Kleidungsstücks die Vorschrift zuzuweisen, die den gleichen Namen wie den dem charakteristischen Punkte zugewiesenen Namen aufweist.

15. Informationssytem nach einem der vorhergehenden Ansprüche,
    **dadurch gekennzeichnet, daß**
    es Mittel, insbesondere ein Expertensystem, zur Erkennung der Stelle verschiedener charakteristischer Punkte auf den verschiedenen Teilen des Kleidungsstückes enthält, um ihnen die entsprechenden Namen zuzuteilen

16. Informationssytem zur Bekleidungsabstufung nach einem der vorhergehenden Ansprüche,
    **dadurch gekennzeichnet, daß**
    es Mittel zur Verarbeitung von Abstufungsvorschriften direkt auf den Teilen eines Kleidungsstückes enthält, daß ein charakteristischer Punkt eines Teiles des Kleidungsstückes einer Vielzahl von Verschiebungen unterworfen sein kann, und daß es Mittel zur Ermittlung der sich aus
dieser Vielzahl von Verschiebungen ergebenden Verschiebung aufweist.

17. Informationssytem zur Bekleidungsabstufung nach Anspruch 1,
**dadurch gekennzeichnet, daß**
es ein Expertensystem enthält, das eine Wissensbasis enthält, in welcher Beziehungen (11) zwischen den Verschiebungen charakteristischer Punkte der Teile eines Kleidungsstückes und die Änderungen der Abmessungen mit der Kleidungsgröße gespeichert sind.

18. Informationssytem zur Bekleidungsabstufung nach einem der vorhergehenden Ansprüche,
**dadurch gekennzeichnet, daß**
es ein Expertensystem enthält, das die Vergleichmäßigung der Aufteilung der Abstände zwischen den verschiedenen Größen einer Tabelle sicherstellt und daß das Expertensystem dem Abstufer die optimale vergleichmäßigte Tabelle vorschlägt.

19. Informationssytem zur Bekleidungsabstufung nach einem der Ansprüche 17 oder 18,
**dadurch gekennzeichnet, daß**
im Falle, daß die zur Durchführung der Abstufung zu benutzende Tabelle bestimmte erhebliche Abmessungen nicht enthält, das Expertensystem diese ausgehend von anderen Abmessungen der gleichen Tabelle ermittelt.

20. Informationssytem zur Bekleidungsabstufung nach einem der vorhergehenden Ansprüche,
**dadurch gekennzeichnet, daß**
es ein Expertensystem aufweist, das die Erkennung der charakteristischen Punkte eines abzustufenden Kleidungsstückes sicherstellt.

21. Informationssytem nach Anspruch 20,
**dadurch gekennzeichnet, daß**
das Expertensystem eine Bank aufweist, welche Beziehungen (11) zwischen den Verschiebungen der charakteristischen Punkte der Teile eines Kleidungsstückes und die Änderungen der Abmessung mit der Kleidungsgröße enthält, und daß es daraus die an die verschiedenen charakteristischen Punkte des abzustufenden Kleidungsstückes zuzuführenden Abstufungsvorschriften ableitet, und daß es die Abstufungsvorschriften den erkannten charakteristischen Punkten zuführt.

22. System nach einem der vorhergehenden Ansprüche,
**dadurch gekennzeichnet, daß**
es eine gruppenweise Abstufung ausführt, wobei die bei den verschiedenen charakteristischen Punkten der Kleidungsstücke zuzuweisenden Abstufungsvorschriften ermittelt werden, gefolgt von der Zuweisung der ermittelten Vorschriften an die verschiedenen charakteristischen Punkte entsprechend den Kleidungsstücken.

23. System nach einem der Ansprüche 1 bis 21,
**dadurch gekennzeichnet, daß**
es eine dynamische Abstufung mit Ermittlung der Abstufungsvorschriften direkt für jeden zugewiesenen Punkt des Kleidungsstückes mit unmittelbarer Zuweisung der Vorschrift an den entsprechenden Punkt durchführt.

24. Verfahren, das ein Informationssystem nach einem der Ansprüche 1 bis 23 benutzt, **dadurch gekennzeichnet, daß** es die folgenden Schritte umfasst, die darin bestehen,

a) in den Zentralspeicher des Rechners die Beschreibung der Geometrien der verschiedenen Teile eines abzustufenden Kleidungsstücks, eine ausgehend von einer statistischen Untersuchung über Abmessungen einer Zielbevölkerung etablierte Abmessungstabelle (10) und eine Beziehung (11) zwischen den Verschiebungen der charakteristischen Punkte der Teile des abzustufenden Kleidungsstückes und der Änderungen der Abmessungen mit der Kleidungsgröße zu laden, welche eine Information umfasst, die den Prozentanteil (21) der Änderung der Größe betrifft, die jedem charakteristischen Punkt jedes Teils des Kleidungsstücks zuzuweisen ist, und eine Information umfasst, die die Orientierung betrifft, die der Verschiebung der charakteristischen Punkte zu geben ist,
b) die Abstände zwischen den Abmessungen aufeinanderfolgender Kleidungsgrößen zu berechnen; und
c) aus der Beziehung (11) zwischen den Verschiebungen der charakteristischen Punkte der Teile eines Kleidungsstücks und den Änderungen der Abmessungen mit der Größe und der Abmessungstabelle (10), die modifiziert ist, um die Änderungen wenigstens einer Abmessung zwischen aufeinanderfolgenden Größen über wenigstens einen Bereich der Größen gleichmäßig zu verteilen, der wenigstens drei aufeinanderfolgende Größen umfasst, die auf die verschiedenen charakteristischen Punkte der verschiedenen Teile des abzustufenden Kleidungsstücks anzuwendenden Abstufungsvorschriften abzuleiten; und

d) die bei Schritt c) bestimmten Abstufungsvorschriften auf die verschiedenen entsprechenden charakteristischen Punkte des Kleidungsstücks anzuwenden;

e) die erhaltene Abstufung in einem Massenspeicher und/oder in einer Datenbank zu speichern.

**25.** Verfahren nach Anspruch 24,
**dadurch gekennzeichnet, daß**
die Abstufung gruppenweise mit einem ersten Schritt zur Ermittlung der an die verschiedenen Punkte der Kleidungsstücke zuzuweisenden Abstufungsvorschriften, gefolgt von einem Zuweisungsschritt der ermittelten Vorschriften an die charakteristischen Punkte entsprechend den Kleidungsstücken, vorgenommen wird.

**26.** Verfahren nach Anspruch 24,
**dadurch gekennzeichnet, daß**
die'Abstufung dynamisch mit der für jeden charakteristischen Punkt des Kleidungsstückes stattfindenden Ermittlung der zuzuweisenden Abstufungsvorschrift, wonach unmittelbar die Zuweisung dieser Vorschrift an den entsprechenden Punkt folgt, ausgeführt wird.

## Claims

**1.** A computerised system for the gradation of garments comprising

- a central unit;
- display means (14);
- input/output means; and
- memory means for storing an operating system;

   **characterised in that**:

   d) the central memory of the computer stores:

   ■ the description of the geometries of the various parts of a garment to be graded;
   ■ a measuring scale (10) established from a statistical study based on measurements of a target population; and
   ■ a relationship (11) between the displacements of the characteristic points of the parts of the garment to be graded and the variations in these measurements with the size of the garment; comprising data concerning the percentage (21) of the variation in the size to be performed at each characteristic point of each part of the garment, and data concerning the orientation to be given to the displacement of the characteristic points.

   e) the central unit comprises means:

   ■ of calculating the intervals between the measurements of consecutive sizes of the garment; and
   ■ for deducing from the relationship (11) between the displacements of the characteristic points of the parts of a garment and the variations in the measurements with the size and scale of measurement (10), modified in such a way as to distribute uniformly the variations of at least one measurement among consecutive sizes across at least a range of sizes comprising at least three consecutive sizes, the gradation rules to be applied to the various characteristic points of the various parts of the garment to be graded; and
   ■ for applying the said gradation rules determined by the said central unit to the various corresponding characteristic points of the garment;

   f) a mass memory and/or a data base stores the gradations applied by the central unit.

**2.** A computerised system for the gradation of garments according to claim 1, **characterised in that** the software (13) is capable of employing one and the same relationship (11) between the displacements of the characteristic points of the parts of a garment and the variations in measurements with the size, with a plurality of measuring scales (10) in order to deduce therefrom a plurality of gradations of a garment.

3. A computerised system according to claim 1 or 2, **characterised in that** the gradation software (13) comprises means of creating fresh relationships (11) between the displacements of the characteristic points of the parts of a garment and the variations in dimensions with the size.

4. A computerised system according to any one of the preceding claims, **characterised in that** it comprises a data base (12) storing at least one measuring scale (10) and at least one relationship (11) between the displacements of the characteristic points of a garment and the variations in measurements with the size.

5. A computerised system according to any one of the preceding claims, **characterised in that** used as characteristic points of the parts of a garment are those points which have to be lined up with the points of measurement of a measurement table (10).

6. A computerised system according to any one of the preceding claims, **characterised in that** it comprises an interface, particularly a graphic interface, comprising menus for dialogue with the grader.

7. A computerised system according to any one of the preceding claims, **characterised in that** it comprises means of displaying pictograms on a graphic screen to represent the data required for processing, of the following types: centre of activity, measurements, type of garments ..., means by which the operator can point to the various graphic elements displayed and means of interpreting these pointing actions as instructions or commands to the computerised system.

8. A computerised system according to claim 6 or 7, **characterised in that** it comprises a menu offering the grader the choice of relationship (11) to be applied between the displacement of the characteristic points of the parts of a garment and the variations in measurements with the size which are available in the system.

9. A computerised system according to claim 6, 7 or 8, **characterised in that** it comprises a menu offering the grader the choice of the measuring scale (10) which is to be used.

10. A computerised system according to any one of the preceding claims, **characterised in that** it comprises means (13,14) for the graphic display of the gradation result.

11. A computerised system according to any one of the preceding claims, **characterised in that** the central unit is a graphic station for computer assisted garment design.

12. A computerised gradation system according to any one of the preceding claims, **characterised in that** the memory means store admissible tolerances in the modification of the measuring scale (10) and **in that** it comprises means of prohibiting any modification which exceeds the said admissible tolerances.

13. A computerised system according to any one of the preceding claims, **characterised in that** it comprises means of modifying the relationships (11) between the displacements of the characteristic points of the parts of a garment and the variations in dimension with the size of the garment, particularly in order to modify the percentages of displacements allocated to the various characteristic points.

14. A computerised system according to any one of claims 1 to 13, **characterised in that** it comprises means of allocating to each characteristic point of the garment to be graded the rule which comprises the same name as the name allocated to the said characteristic point.

15. A computerised system according to any one of the preceding claims, **characterised in that** it comprises means, particularly an expert system, of recognising the placing of the various characteristic points on the various parts of the garment in order to allocate the corresponding names to them.

16. A computerised system for the gradation of garments according to any one of the preceding claims, **characterised in that** it comprises means of processing gradation rules directly on the parts of a garment, **in that** a characteristic point of a part of the garment may undergo a plurality of displacements and **in that** it comprises means of determining the displacement resulting from this plurality of displacements.

**17.** A computerised system for the gradation of garments according to claim 1, **characterised in that** it comprises an expert system comprising a base of knowledge in which are stored relationships (11) between the displacements of the characteristic points of the parts of a garment and the variations in the measurements with the size of the garment.

**18.** A computerised system for the gradation of garments according to any one of the preceding claims, **characterised in that** it comprises an expert system for standardising the distribution of intervals between the various sizes on a scale and **in that** the expert system proposes the optimum standardised scale to the grader.

**19.** A computerised system for the gradation of garments according to claim 17 or 18, **characterised in that** in the event of the scale to be used for carrying out gradation not comprising certain pertinent measurements, the expert system determines them on the basis of other measurements on the same scale.

**20.** A computerised system for the gradation of garments according to any one of the preceding claims, **characterised in that** it comprises an expert system which ensures recognition of the characteristic points of a garment which is to be graded.

**21.** A computerised system according to claim 20, **characterised in that** the expert system comprises a base comprising relationships (11) between the displacements of the characteristic points of the parts of a garment and the variations in measurements with the size of the garment and **in that** it deduces therefrom the gradation rules to be applied to the various characteristic points of the garment to be graded and **in that** it applies the gradation rules to 20 the characteristic points recognised.

**22.** A system according to any one of the preceding claims, **characterised in that** it carries out gradation by batch establishing the gradation rules to be allocated to the various characteristic points of the garments followed by allocation of specific rules to the various corresponding characteristic points of the garments.

**23.** A system according to any one of claims 1 to 21, **characterised in that** it performs a dynamic gradation with determination of the gradation rules directly for each point of the garment which is affected with immediate allocation of the rule to the corresponding point.

**24.** A method for the gradation of garments employing a computerised system according to any one of claims 1 to 23, **characterised in that** it comprises the following stages, consisting of:

a) loading into the central memory of the computer the description of the geometries of the various parts of a garment to be graded, a scale of measurements (10) established from a statistical study based on measurements of a target population, and a relationship (11) between the displacement of the characteristic points of the parts of the garment to be graded and variations in the measurements with the size of the garment comprising data concerning the percentage (21) of the variation in the size to be performed at each characteristic point of each part of the garment, and data concerning the orientation to be given to the displacement of the characteristic points;

b) calculating the intervals between the measurements of consecutive sizes of the garment;

c) deducing from the relationship (11) between the displacements of the characteristic points of the parts of a garment and the variations in measurements with the size and the scale of measurements (10), modified in such a way as to distribute uniformly the variations of at least one measurement among consecutive sizes across at least a range of sizes comprising at least three consecutive sizes, the gradation rules to be applied to the various characteristic points of the various parts of the garment to be graded;

d) applying the gradation rules determined in stage (c) to the various corresponding characteristic points of the garment;

e) storing the gradation obtained in a mass memory and/or in a data base.

**25.** A method according to claim 24, **characterised in that** gradation is carried out by batch with a first stage of determining the gradation rules to be allocated to the various characteristic points of the garments followed by a stage of allocating specific rules to the corresponding characteristic points of the garments.

**26.** A method according to claim 24, **characterised in that** gradation is carried out dynamically with, for each characteristic point of the garment, determination of the gradation rule to be allocated, being immediately followed by allocation of this rule to the corresponding point.

*FIG.1*

*FIG.2*

EP 0 706 333 B2

FIG.3

FIG.4

**FIG.5**

EP 0 706 333 B2

*FIG.6*

*secteur H,F,E...* — 15

*population/ barème* — 16

*type vetement vest pant...* — 17

*11*

*taxonomie*

18 — *mesuration requise*

19 — *pièce du vetement*

20 — *point affecté*

21 — *pourcentage affecté*

22 — *point origine*

23 — *point direction*

*mensuration* — 10

24

*25*

*intervalle* — 26

*27* — *nom de la règle*

*signe Δ(X,Y)* — 28

*valeure de l'incrément pour une taille* — 29

30 — *règle de gradation*

30 — *règle de gradation*

30 — *règle de gradation*

*FIG.10*

EP 0 706 333 B2

33

FIG.11

*secteur,taille* — 44

*vêtement* — 45

*géométrie* — 46

type de vêtement — 47

11

Taxonomie
pièce 1

| PC1 | PC2... | PCT |
|-----|--------|-----|
| %D | %D | %D |

pièce 2

⋮

pièce y

*taxonomie* — 48

points caractéristique — 49

*barème de mensurations* — 50

*barème de mensurations* — 51

T = 0 — 52

T = T +1 — 53

PC=0 — 54

PC=PC+1 — 55

Barème
des mensuration

| mensuration | | 1 | |
|-----|-----|-----|-----|
| T36 | T38 | .... | T44 |
| | | | |

| mensuration | | 2 | |
|-----|-----|-----|-----|
| T36 | T38 | .... | T44 |
| | | | |

⋮

| mensuration | | z | |
|-----|-----|-----|-----|
| T36 | T38 | .... | T44 |
| | | | |

10

calcul incréments — 56

gradation — 9

dernier point — Non — 57 — Oui

dernière taille — Non — 58 — Oui

un autre barème — Oui — 59

FIN — 60

*FIG.12*

160 ⟋ secteur

61 ⟋ tailles

barème de mesuration ⟋ 62

"type vêtement" ⟋ 63

Chargement ⟋ 64

65 ⟋ taxonomie
à modifier

→ taxonomie ⟋ 66

affectation des
incréments ⟋ 67

68 ⟋ affichage

70

OK ⟵ Non → modification de la
repartition
des incréments

69 ⟋ Oui

mémoriser
taxonomie ⟶ Oui

71 ⟋ Non ⟵ mémorisation

72

nouvelle
taxonomie

Oui

Non ⟋ 73

FIG.8

FIN ⟋ 74

*FIG.7*

37

Règles
W01
D01
⋮
A02

9

D04  D13        W03     W04        D16    D10
D01                                            D07
   D03  D06  D15                D18  D12  D09

W01 ○─────────────────────○          ○─────────────────○ W02
        LIGNE TAILLE
        1B    2B    3B                      3F    2F    1F

        D02   D05   D14                    D17   D11   D08

H01 ○────LIGNE HANCHES─────────⊗───────────────────○ H02
                              H03    H04

LIGNE MILIEU DOS          LIGNE COTE DOS
                          LIGNE COTE DEVANT          LIGNE MILIEU DEVANT

K01 ⊕────LIGNE GENOUX──────────⊕────────────────⊕ K02
                             K03   K04

A01 ⊕──LIGNE CHEVILLE──────⊗──────DEVANT──────⊕ A02
         DOS
                          A03  A04

*FIG.9*

FIG.13a

FIG.13b

FIG.13c

FIG.14